(19) Europäisches Patentamt / European Patent Office / Office européen des brevets

(11) **EP 3 832 948 A1**

(12) # DEMANDE DE BREVET EUROPEEN

(43) Date de publication:
**09.06.2021 Bulletin 2021/23**

(21) Numéro de dépôt: **20209923.0**

(22) Date de dépôt: **25.11.2020**

(51) Int Cl.:
*H04L 9/06* (2006.01)   *H04L 9/08* (2006.01)
*H04L 9/12* (2006.01)   *H04L 9/16* (2006.01)
*H04L 9/32* (2006.01)

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
**KH MA MD TN**

(30) Priorité: **04.12.2019 FR 1913754**

(71) Demandeur: **Sangle-Ferriere, Bruno**
**75016 Paris (FR)**

(72) Inventeur: **Sangle-Ferriere, Bruno**
**75016 Paris (FR)**

(74) Mandataire: **Nony**
**11 rue Saint-Georges**
**75009 Paris (FR)**

(54) **RENOUVELLEMENT DE CLÉS À USAGE UNIQUE**

(57) Procédé pour sécuriser la communication au sein d'un système comportant au moins un serveur et au moins deux appareils pouvant communiquer avec le serveur et entre eux, dans lequel une paire d'appareils communiquant ensemble et ayant au moins une clé de cryptage à usage unique en commun pour sécuriser la communication entre les deux, dispose d'au moins une autre clé de cryptage à usage unique en commun fournie par le serveur après la connexion d'un seul des deux appareils audit serveur.

Fig. 1a

EP 3 832 948 A1

Fig. 1b

Fig. 1c

Fig. 1d

Fig. 1e

Fig. 1f

## Description

### Domaine technique

La présente invention concerne la cryptographie numérique et la sécurité des dispositifs informatiques et électroniques.

### Technique antérieure

Les ordinateurs et les appareils électroniques sont souvent connectés sur un réseau, physiquement, sans fil, par RFID, ou par tout autre moyen sécurisé ou non, et ont parfois besoin de connaître l'identité de l'appareil qui leur a envoyé certaines données, par exemple pour s'assurer que ces données ne sont pas transmises par un autre appareil, qui les aurait interceptées et modifiées avant de les renvoyer au destinataire légitime, ou tout simplement pour identifier sans aucun doute l'identité de l'expéditeur des données.

À cette fin, certains logiciels sont souvent installés sur chacun des appareils destinés à communiquer, ces logiciels cryptant ou signant les données, de manière à ce que ces données cryptées ou signées puissent être transmises sur une ligne non sécurisée à l'autre appareil. Par « signer » les données, il faut entendre un hachage de ces données suivi d'un cryptage des données hachées.

Le cryptage est destiné à garantir que les données cryptées ne peuvent être déchiffrées que par des dispositifs dotés de la clé de chiffrement appropriée, et la signature permet au dispositif récepteur de vérifier l'identité du dispositif expéditeur des données en comparant le haché issu de la signature décryptée au haché qu'il peut recalculer à partir des données reçues.

Les logiciels de cryptage et de signature utilisent souvent des clés cryptographiques symétriques et asymétriques ainsi que des algorithmes de cryptage et de décryptage. De tels algorithmes de chiffrement et de signature reposent toutefois principalement sur la difficulté voire l'impossibilité d'avoir une puissance informatique nécessaire pour recalculer une clé de chiffrement, cette puissance étant souvent supérieure à la puissance fournie par les ordinateurs grand public. Cependant, la puissance informatique des ordinateurs ne cesse de croître et peut également être considérablement accrue grâce à l'utilisation d'une multitude d'ordinateurs exécutant la même tâche. Parfois, les spécialistes de la cryptographie trouvent également des moyens de réduire la puissance requise pour trouver des clés chiffrées grâce à l'utilisation de propriétés mathématiques adaptées à certains algorithmes. Enfin, l'avènement des ordinateurs quantiques risque de rendre tous ces algorithmes et clés obsolètes, les ordinateurs quantiques étant adaptés à la résolution très rapide d'équations, telles que la recherche de la clé de cryptage utilisée pour la signature.

Il devient donc nécessaire d'utiliser des clés à usage unique pour sécuriser l'échange de données entre deux dispositifs. Celles-ci ne peuvent être utilisées qu'une fois ou un nombre réduit de fois pour donner une certaine confidentialité aux données échangées, car le fait de changer les clés augmentera souvent le coût de leur recalcul par les pirates informatiques. Si les clés changent assez souvent, le temps nécessaire pour les recalculer est trop long pour devenir un problème pour la sécurité du système les utilisant, notamment lorsque le périphérique destinataire a suffisamment de temps pour vérifier l'identité de l'expéditeur et y donner suite avant que la clé de signature ne soit recalculée ou, si la confidentialité des données chiffrées n'est plus nécessaire, après que la clé de chiffrement a été trouvée.

Par ailleurs, les chiffrements utilisant des clés ayant un nombre de bits au moins égal au nombre de bits de la donnée à chiffrer peuvent être indéchiffrables.

L'utilisation de clés à usage unique par des dispositifs électroniques nécessite une grande quantité de mémoire et nécessite la présence des clés sur chacun des deux dispositifs communicants mais celles-ci peuvent en être supprimées après leur utilisation.

Le brevet US 5 907 620 concerne une méthode cryptographique fournissant une fonction cryptographique uniforme qui opère de manière compatible avec diverses politiques cryptographiques nationales, régionales ou industrielles.

Le brevet US 6 072 876 divulgue une méthode de dépôt d'une clé privée utilisée dans le cryptosystème RSA, capable de conserver la clé privée de manière plus sécurisée, sans exiger d'un utilisateur qu'il ait constamment un support de stockage.

Le brevet US 5 675 648 décrit une méthode de communication utilisant la cryptographie quantique, en particulier certaines propriétés physiques quantiques de la transmission de photons.

Le brevet US 5 124 117 concerne un procédé et un système utilisant un protocole pour établir une clé secrète sécurisée entre deux terminaux ou plus via un réseau.

La demande US 2005/0226420 divulgue un réseau de communication de données comprenant au moins deux équipements terminaux qui sont utilisés pour gérer un ensemble de clés de cryptage indexées et parmi ceux-ci, le premier équipement terminal est au moins un émetteur et le second équipement terminal est au moins un récepteur. Un fonctionnement de ce procédé de communication dans un environnement non sécurisé n'est possible que s'il y a un contrôle des utilisateurs ayant accès au réseau local.

**Exposé de l'invention**

Il existe un besoin pour perfectionner encore la sécurité des systèmes en fournissant des clés de cryptage à usage unique à chaque paire d'éléments pouvant avoir besoin d'échanger des données en toute confidentialité.

L'invention vise notamment à y répondre, et elle y parvient grâce à un procédé pour sécuriser la communication au sein d'un système comportant au moins un serveur et au moins deux appareils pouvant communiquer avec le serveur et entre eux, la communication entre les deux appareils s'effectuant de façon sécurisée par une clé de cryptage à usage unique commune aux deux appareils, procédé dans lequel après usage de ladite clé, une clé de cryptage à usage unique inutilisée mais déjà présente sur l'un des deux appareils est communiquée par le serveur à l'autre appareil, après que ce dernier s'est connecté audit serveur, en vue d'une communication sécurisée ultérieure entre les deux appareils. L'invention a encore pour objet un procédé pour sécuriser la communication au sein d'un système comportant au moins un serveur et au moins deux appareils pouvant communiquer avec le serveur et entre eux, dans lequel une paire d'appareils communiquant ensemble et ayant au moins une clé de cryptage à usage unique en commun pour sécuriser la communication entre les deux, dispose d'au moins une autre clé de cryptage à usage unique en commun fournie par le serveur après la connexion d'un seul des deux appareils audit serveur.

De préférence, le premier appareil se connecte au serveur dans un environnement non sécurisé et obtient du serveur une copie cryptée d'une clé de cryptage, initialement attribuée pour sécuriser la communication entre le serveur et le deuxième appareil, afin d'être utilisée pour sécuriser la communication entre les deux appareils.

Dans la suite de la description, le terme « clé à usage unique » sera utilisé et désignera une clé de cryptage à usage unique.

Les termes « cryptage » et « chiffrage » sont interchangeables.

Une clé est constituée d'un nombre avantageusement codé en informatique par une suite de bits, le nombre de bits constituant la clé étant sa taille.

L'expression « envoyer un message en clair » signifie envoyer un message sans le chiffrer. Tout message décrit comme envoyé en clair pourra cependant en variante, sans que ceci ne soit rappelé, aussi être crypté par un procédé de cryptage classique ne nécessitant pas de changer la clé utilisée à chaque envoi.

De préférence, la clé de cryptage à usage unique inutilisée mais présente sur l'un des deux appareils est initialement générée aléatoirement par le serveur, par exemple un générateur de nombres aléatoires quantique, puis récupérée par cet appareil après sa connexion au serveur.

De préférence, le procédé selon l'invention sert à échanger des messages où ledit au moins un serveur et lesdits au moins deux appareils gardent en mémoire leur dernier message envoyé d'un même type, autre qu'un accusé de réception, et faisant usage de clé à usage unique, jusqu'à ce qu'il y ait réception d'un accusé de réception pour ledit message.

Dans la présente invention, deux types de messages sont définis, le premier type se rapportant aux messages transférant d'un premier dispositif à un deuxième dispositif, en plus d'éventuelles informations, des clés en nombre suffisant nécessaires au renvoi d'un accusé de réception audit message envoyé par le premier dispositif au deuxième dispositif, le second type regroupant tout autre message ; le nombre de clés nécessaires au renvoi d'un accusé de réception étant le nombre de clés nécessaires à la signature dudit accusé de réception augmenté éventuellement du nombre de clés nécessaires à la rédaction de l'accusé de réception, et notamment du nombre de clés utilisées à l'éventuel cryptage d'informations contenues dans ledit accusé de réception.

Ledit au moins un serveur et lesdits au moins deux appareils gardent préférentiellement dans un registre, les accusés de réception envoyés à la suite de la réception du dernier message d'un même type, de telle sorte qu'ils puissent renvoyer ledit accusé de réception s'ils devaient recevoir de nouveau le même message.

De préférence, ledit au moins un serveur et lesdits au moins deux appareils gardent aussi dans un registre les messages correspondant aux accusés de réception conservés, ou un autre moyen de reconnaître lesdits messages, tel que leur haché, de façon à pouvoir vérifier si un message reçu a déjà donné lieu à la préparation d'un accusé de réception.

De préférence, les registres modifiés de par la création et la signature d'un message, y compris le registre contenant un dernier message envoyé n'ayant pas reçu d'accusé de réception, sont modifiés en même temps.

Les registres devant être modifiés lors de la réception d'un message, y compris le registre contenant l'accusé de réception et le moyen de reconnaître le message auquel correspond ledit accusé de réception sont de préférence modifiés en même temps.

L'invention a encore pour objet, selon un autre de ses aspects, deux versions d'un système pour la mise en œuvre du procédé selon l'invention.

Les **clés dans la première version de l'invention** sont disposées les unes à la suite des autres dans un registre, formant une liste, chacune des clés étant de préférence référencée par sa place dans la liste ; la place d'une clé pouvant être le décompte de clés précédant ladite clé dans la liste, ou bien au contraire, le décompte des clés suivantes, ou tout autre procédé de localisation de nombres, ladite liste étant, de préférence extensible, des clés pouvant être ajoutées par exemple en son sein, et dynamique, les clés ayant été utilisées en début ou fin de liste en étant, de préférence effacées.

Les **clés dans la seconde version de l'invention** sont disposées sur un registre, chacune des clés comportant un identifiant unique, ladite liste étant de préférence extensible, des clés pouvant y être ajoutées, et dynamique, les clés utilisées pouvant en être effacées. Les clés peuvent y avoir des tailles différentes.

**Registres**

Le système comporte un ensemble de registres, un registre étant défini par un emplacement de mémoire, interne à un processeur ou, de préférence, un emplacement de mémoire persistante qui conserve les informations malgré la mise hors tension de l'appareil ; comme de la mémoire flash. Ces registres sont de préférence protégés physiquement et logiquement pour que l'information qui s'y trouve ne puisse pas être modifiée ou copiée par un élément externe au système.

Alors que certains registres utilisés par l'invention ont les mêmes fonctions dans les deux versions, certains, liés aux clés ont des fonctions propres à chacune des versions. Nous donnerons à chaque registre un nom commençant par S pour un registre du serveur ou commençant par A pour un registre de l'appareil, certains registres existant donc dans les deux versions de l'invention, tandis que d'autres ne sont présents que dans seulement une des versions de celle-ci.

L'invention permet l'organisation des clés à usage unique en différents ensembles disposés sur des registres au sein du système, assurant la sécurité de la communication et facilitant la synchronisation des clés entre les différents éléments du système et porte aussi sur un protocole d'utilisation de ces clés.

Registres propres à la première version

Selon l'invention, le système peut comporter l'un au moins de :

- un registre S1 pour chaque appareil, mais situé sur le serveur, contenant une liste ordonnée de nombres aléatoires associée à l'appareil, ces nombres pouvant servir de clés à usage unique communes pour sécuriser la communication entre l'appareil et le serveur et des clés à usage unique servant à sécuriser des communications entre l'appareil et un autre appareil; ainsi, il y a autant de listes (registres S1) que d'appareils ; les clés situées en début de liste sont de préférence utilisées au cryptage des données envoyées vers l'appareil ou bien affectées au cryptage et décryptage de données échangées par l'appareil avec un autre appareil tandis que les clés situées en fin de liste sont de préférence utilisées au décryptage de données provenait de l'appareil. Dans une autre variante de l'invention, le système peut disposer de plusieurs serveurs et chaque appareil dispose alors d'autant de registres A1 que de serveurs.
- au moins un registre S3 pour chaque appareil, mais situé sur le serveur, contenant, pour l'appareil, une référence de clés affectées à sécuriser la communication entre l'appareil et un autre appareil ; ces références étant de préférence accompagnées des copies dans le registre S39 des extraits des registres S1 qu'elles désignent. La référence peut indiquer duquel registre S1 des premier ou second appareils la clé est extraite ainsi que son emplacement dans ledit registre S1 et la quantité de nombres dont elle est constituée, ainsi que, s'il y a plus d'un serveur dans le système, de la référence du serveur portant ledit registre S1.
- un registre S11 pour chaque appareil, mais situé sur le serveur, comportant la référence de la première clé du registre S1 qui n'a pas encore ni été utilisée ni n'a été affectée à la communication entre appareils.
- un registre S12 pour chaque appareil, mais situé sur le serveur, comportant la référence de la première clé du registre S1 affectée au décryptage des données provenant de l'appareil.
- un registre S13 pour chaque appareil, mais situé sur le serveur, comportant de préférence la dernière clé du registre S1 affectée au décryptage des données provenant de l'appareil qui n'a pas déjà été utilisée.
- au moins un registre S31 pour chaque appareil, mais situé sur le serveur, associé à chaque registre S3 comportant la référence de la première clé du registre S3 qui n'a pas encore été utilisée par l'appareil.
- au moins un registre S32 pour chaque appareil, mais situé sur le serveur, associé à chaque registre S3 comportant la référence de la première clé du registre S3 affectée au décryptage des données reçues de l'autre appareil si les premières clés du registre S3 étaient affectées au cryptage, ou bien affectées au cryptage si les premières clés du registre S3 étaient affectées au décryptage.
- au moins un registre S33 pour chaque appareil, mais situé sur le serveur, associé à chaque registre S3 comportant la référence de la dernière clé du registre S3 située après la clé indiquée par le registre S32 et qui n'a pas encore été utilisée,

- un registre A1, situé sur chaque appareil contenant une liste ordonnée de nombres aléatoires pouvant servir de clés à usage unique communes pour sécuriser la communication entre l'appareil et le serveur et des clés à usage unique servant à sécuriser des communications entre l'appareil et un autre appareil ; les clés situées en début de liste sont de préférence utilisées au décryptage des données en provenance du serveur ou bien affectées au cryptage et décryptage de données échangées par l'appareil avec un autre appareil tandis que les clés situées en fin de liste sont de préférence utilisées au cryptage de données envoyées vers le serveur.
- au moins un registre A3, situé sur chaque appareil, contenant une ou plusieurs listes de références de clés affectées à sécuriser la communication entre l'appareil et un autre appareil, ces clés étant extraites du registre A1 de l'appareil ou du registre A1 de l'autre appareil, ces références étant de préférence accompagnées des copies sur le registre A39 des extraits des registres A1 qu'elles désignent. La référence indique si la clé est extraite du registre A1 de l'appareil ou bien du registre A1 de l'autre appareil ainsi que son emplacement dans ledit registre A1 et la quantité de nombres aléatoires dont elle est constituée. Si le système dispose de plusieurs serveurs, la référence indique aussi l'identifiant du serveur associé au registre S1.
- un registre A11, présent sur chaque appareil, comportant la référence de la première clé du registre A1 qui n'a pas encore ni été utilisée ni affectée à la communication entre appareils.
- un registre A12, présent sur chaque appareil, comportant la référence de la première clé du registre A1 (en partant du début dudit registre) affectée au cryptage des données envoyées au serveur.
- un registre A13, présent sur chaque appareil, comportant la référence de la dernière clé du registre A1, en partant du début dudit registre, affectée au cryptage des données envoyées au serveur, qui n'a pas déjà été utilisée.
- au moins un registre A31, présent sur chaque appareil, associé à chaque registre A3 comportant la référence de la première clé du registre A3, en partant du début dudit registre, qui n'a pas encore été utilisée.
- au moins un registre A32, présent sur chaque appareil, associé à chaque registre A3 comportant de préférence la première clé du registre A3, en partant du début dudit registre, affectée au décryptage des données envoyées à l'autre appareil.
- au moins un registre A33, présent sur chaque appareil, associé à chaque registre A3 comportant la dernière clé du registre A3, en partant du début dudit registre, affectée au décryptage des données provenant de l'autre appareil et qui n'a pas déjà été utilisée, les clés de décryptage étant extraites à partir de la fin de la liste.

Registres propres à la seconde version

Le système selon l'invention peut comporter l'un au moins de :

- un ensemble S1' pour chaque appareil mais présent sur le serveur, de clés à usage unique utilisées soit pour la communication entre le serveur et lesdits au moins deux appareils soit pour la communication entre lesdits au moins deux appareils, chaque clé possédant un identifiant S11' et un nombre ayant été généré aléatoirement S10'.
- au moins un ensemble S3' pour chaque appareil mais présent sur le serveur, d'identifiants de clés à usage unique utilisées pour la communication entre deux appareils, une copie de ladite clé pouvant se trouver sur le registre S39', et si le système comporte plusieurs serveurs, l'identifiant du serveur porteur du registre S1' dont la clé est extraite.
- un ensemble A1' présent sur chaque appareil, de clés à usage unique utilisées pour la communication entre le serveur et l'appareil en question ou pour la communication de cet appareil avec au moins un autre appareil, chaque clé possédant un identifiant A11'et un nombre ayant été généré aléatoirement A10'. Dans une autre variante de l'invention, le système peut disposer de plusieurs serveurs et chaque appareil dispose alors d'autant de registres A1' que de serveurs.
- au moins un ensemble A3', présent sur chaque appareil, d'identifiants de clés à usage unique utilisées pour la communication entre l'appareil en question et un autre appareil, accompagné éventuellement de ladite clé,
- de préférence, chaque clé à usage unique appartenant à l'ensemble S1', respectivement A1', a un premier drapeau S17' (respectivement A17') indiquant si la clé a déjà été utilisée et un deuxième drapeau S18' (respectivement A18') indiquant si l'identifiant de la clé est présent sur l'ensemble S3', respectivement A3' et un troisième drapeau S12' (respectivement A12') indiquant si la clé sert à crypter les messages sur le serveur ou bien à les y décrypter.

Il peut y avoir, dans l'ensemble S1', différentes tailles de clés à usage unique. La taille d'une clé à usage unique, par exemple exprimée en nombre de bits, est préférentiellement supérieure ou égale à la taille des données qu'elle crypte.

Les ensembles S3', contenant des identifiants de clés à usage unique utilisées pour la communication entre deux appareils, sont de préférence organisés de façon à ce que les identifiants de clés sont triés par l'identifiant du premier appareil, d'éventuels index permettant d'accéder rapidement aux informations relatives au deuxième appareil, ou bien l'information pouvant être dupliquée, les identifiants des deux étant inversés pour la version dupliquée.

La date et l'heure d'utilisation de chaque clé peuvent également être renseignées. L'ensemble A1' d'un appareil contient de préférence les mêmes informations que l'ensemble S1' du serveur, mais restreintes aux clés de communication utilisées ou à utiliser par ledit appareil.

Les ensembles A3' d'un appareil contiennent de préférence les mêmes informations que les ensembles S3' du serveur, mais restreintes aux clés de communication utilisées ou à utiliser par ledit appareil.

De préférence, chaque identifiant de clé à usage unique appartenant à l'ensemble A3' a un drapeau A32' indiquant si la clé sert à crypter des messages sur ledit appareil ou bien à les y décrypter.

Registres communs aux deux versions

Le système selon l'invention peut comporter l'un au moins de :

- de préférence pour chaque appareil, un registre S14 situé sur le serveur, comportant le nombre total de clés du registre S1 ou S1'
- deux registres S15 et S15bis pour chaque appareil mais situés sur le serveur comportant chacun un message envoyé vers l'appareil qui n'a pas donné lieu à la réception d'un accusé de réception en provenance dudit appareil alors qu'un tel accusé de réception était demandé ; le registre S 15bis étant réservé aux messages contenant les clés permettant à l'appareil recevant ledit message d'envoyer un accusé de réception.
- deux registres S16 et S16bis pour chaque appareil mais situés sur le serveur comportant un accusé de réception de messages ainsi qu'un identifiant du message auquel il se réfère, comme le message lui-même, ou de préférence son haché, le registre S16bis étant réservé aux accusés de réception de messages contenant les clés permettant à l'appareil recevant ledit message d'envoyer un accusé de réception.
- au moins un registre S30 pour chaque appareil mais situé sur le serveur associé à chaque registre S3 constitué d'un drapeau indiquant si la clé est issue du registre S1 ou S1' de l'appareil ou bien si celle-ci est issue du registre S1 ou S1' de l'autre appareil ainsi que de l'identifiant de la même clé sur ce même registre S1 ou S1'.
- un registre S2 pour chaque appareil mais situé sur le serveur, contenant l'identifiant de l'appareil auquel l'ensemble de registres associés audit appareil se rapporte.
- un registre S4 pour chaque appareil mais situé sur le serveur, contenant des statistiques d'utilisation de clés à usage unique et, de préférence, pour chaque autre appareil le nombre optimal de clés usage unique à associer à l'autre appareil. Ce nombre optimal peut être déterminé par le serveur ou l'appareil et peut par exemple être un multiple du nombre de fois où les deux appareils ont communiqué au cours de la semaine passée plus le nombre de fois où les deux appareils ont communiqué au cours des trois dernières semaines passées, plus un nombre fixe ; ce nombre fixe pouvant dépendre de chaque paire d'appareils, pouvant par exemple être plus grand pour les appareils réputés situés dans une même zone géographique. L'ensemble S4 du serveur peut contenir, de façon non limitative, pour chaque appareil, les identifiants des autres appareils avec lesquels ledit appareil a déjà communiqué pendant une période donnée ainsi que la quantité de clés à usage unique utilisées, pendant la semaine en cours ou les trois semaines précédentes. Les appareils peuvent aussi comporter un registre A4 comportant des statistiques d'usage de clés et de communication dont leur date et heure d'utilisation;
- de préférence, un registre S5 pour chaque appareil mais situé sur le serveur, contenant une liste d'identifiants d'autres appareils qui doivent être supprimés du registre A3 ou A3' de l'appareil lors de la prochaine connexion de l'appareil au serveur, ces identifiants pouvant avoir été ajoutés à cette liste par exemple par mesure de sécurité pour empêcher la communication des appareils du système avec ledit au moins un autre appareil. L'appareil peut aussi comporter un registre A5 contenant ces informations ;
- de préférence, au moins un registre S34 pour chaque appareil mais situé sur le serveur associé à chaque registre S3 ou S3' comportant le nombre total de clés du registre S3 ou S3'.
- au moins un registre S35 pour chaque appareil mais situé sur le serveur associé à chaque registre S3 ou S3'indiquant si ce registre S3 a été copié sur l'appareil.
- au moins un registre S36 pour chaque appareil mais situé sur le serveur associé à chaque registre S3 ou S3' indiquant si ce registre S3 ou S3' a été copié sur l'autre appareil.
- de préférence, chaque identifiant de clé à usage unique appartenant à l'ensemble S3 ou S3' a un drapeau S37 indiquant si la clé ne doit plus être utilisée.
- au moins un registre S38 pour chaque appareil mais situé sur le serveur associé à chaque registre S3 ou S3' indiquant l'identifiant de l'autre appareil et, de préférence, un registre S38bis indiquant l'identifiant d'un troisième appareil, la clé du registre S3 correspondant étant, si ce registre n'est pas vide, dédiée aux communications entre l'autre appareil et le troisième appareil, et non entre l'appareil et l'autre appareil, et devant être communiquée par l'appareil à l'autre appareil
- de préférence, deux registres S42 et S42bis pour chaque appareil mais situés sur le serveur, associés à chaque autre appareil servant de drapeau pour indiquer si une demande de clés ou d'inversion de rôle de clés respectivement à destination ou en provenance de l'autre appareil doit être signée ou non.
- un registre A2, présent sur chaque appareil, contenant un identifiant de l'appareil en question,

- de préférence un registre A14 présent sur chaque appareil comportant le nombre total de clés du registre A1,
- deux registres A15 et A15bis présents sur chaque appareil comportant chacun un message envoyé vers le serveur qui n'a pas donné lieu à la réception d'un accusé de réception en provenance de celui-ci alors qu'un tel accusé de réception était demandé.
- deux registres A16 et A16bis présents sur chaque appareil comportant chacun un accusé de réception de messages ainsi que le message auquel il se réfère ou alternativement son haché;
- un registre A30 constitué d'un drapeau indiquant si la clé est issue du registre S1 ou S1' de l'appareil ou bien si celle-ci est issue du registre S1 ou S1' de l'autre appareil ainsi que de l'identifiant de la même clé sur ce même registre S1 ou S1',
- de préférence un registre A34 présent sur chaque appareil associé à chaque registre A3 comportant le nombre total de clés du registre A3 ou A3',
- de préférence, un registre A35 présent sur chaque appareil associé à chaque registre A3 contenant un drapeau 'serveur' indiquant si l'un des autres registres associés au registre A3 ou A3' a été modifié depuis la dernière connexion de l'appareil en question avec le serveur,
- de préférence un registre A36 présent sur chaque appareil associé à chaque registre A3 ou A3'comportant un drapeau indiquant si le registre A3 ou A3' est présent sur l'autre appareil,
- de préférence, chaque identifiant de clé à usage unique appartenant à l'ensemble A3 ou A3' ayant un drapeau A37' indiquant si la clé ne doit plus être utilisée.
- un registre A38 présent sur chaque appareil associé à chaque registre A3 ou A3' comportant l'identifiant de l'autre appareil auquel le registre A3 ou A3' est associé, et de préférence un registre A38bis indiquant l'identifiant d'un troisième appareil, le registre A3 étant alors, si ce registre n'est pas vide, dédié aux sécurisations de communication entre le troisième appareil et l'autre appareil dont l'identifiant est inscrit dans le registre A38.
- deux registres A40 et A40bis présents sur chaque appareil et associés à chaque autre appareil comportant chacun un message envoyé vers l'autre appareil qui n'ont pas donné lieu à la réception d'un accusé de réception en provenance de celui-ci, alors qu'un tel accusé de réception était demandé ; le message étant de préférence associé à l'identifiant de l'appareil destinataire du message. Le registre A40bis pourra de préférence contenir un message transférant ou inversant des clés permettant à l'appareil recevant ledit message d'en accuser réception.
- un registre A41 et un autre registre A41bis présents sur chaque appareil et associé à chaque autre appareil comportant chacun un accusé de réception de messages ainsi que les messages auxquels ils se réfèrent ou alternativement leur haché; le registre A41bis pourra de préférence contenir l'accusé de réception d'un message de transfert de clés.
- de préférence deux registres A42 et A42bis associés à chaque autre appareil ou au serveur servant de drapeau pour indiquer si une demande de clés ou d'inversion de rôle de clés respectivement à destination ou en provenance de l'autre doit être signée ou non.

L'ensemble des registres peut être agencé autrement sur le serveur et/ou lesdits appareils, tout en permettant d'en extraire les informations décrites ci-dessus.

Chacune des listes ci-dessus peut être agencée de sorte que les registres, notamment ceux occupés par les nombres aléatoires utilisés puissent être effacés ou réaffectés à des usages similaires ou différents. Les registres contenant des nombres aléatoires peuvent par exemple contenir :

- des sous-registres comprenant des pages ou des portions de pages de nombres aléatoires pointant chacune vers les pages ou portions de pages suivantes ou précédentes et dont le premier bit inscrit sur chaque page ou chaque portion de page indique si la portion de page ou la page peuvent être effacées,
- un autre sous-registre contenant l'adresse des premières et dernières pages ne pouvant pas être effacée ainsi qu'une indication permettant d'y retrouver les nombres aléatoires correspondant à l'emplacement auquel les registres A11, A12, A13, A31, A32 ou A33 font référence.

Dans ce cas, le décompte des nombres aléatoires contenus dans chaque registre comptera, de préférence, les nombres effacés comme encore présents, d'autres registres pouvant avantageusement être introduits pour décompter le nombre de clés réellement présentes sur les registres S1, S3, A1 ou A3.

L'appareil et le serveur peuvent contenir d'autres registres éventuellement mis à jour au cours de leur utilisation, tels que des index, permettant d'accélérer leur consultation et leur propre mise à jour. Le serveur ou l'appareil peuvent aussi comporter des procédures permettant de déplacer les suites de nombres aléatoires contenues dans des pages vers d'autres pages si cette opération permet de rassembler différentes pages de nombres aléatoires non utilisés sur une même page et ainsi libérer des pages qui peuvent alors être réutilisées.

Tableau récapitulatif des registres

| fonction | serveur | appareil | serveur | appareil |
|---|---|---|---|---|
| Clés serveurs-appareils | S1 | A1 | S1' | A1' |
| Identifiant de l'appareil | S2 | A2 | S2 | A2 |
| Clés appareil-appareil | S3 | A3 | S3' | A3' |
| statistiques d'usage de clés | S4 | A4 | S4 | A4 |
| liste d'identifiants d'appareils à supprimer de A3 ou A3' | S5 | A5 | S5 | A5 |
| nombre aléatoire de la clé | non | non | S10' | A10' |
| identifiant de la clé | non | non | S11' | A11' |
| clé issue de l'autre appareil ? | S30 | A30 | S30 | A30 |
| copie du nombre aléatoire de la clé issue de S1 ou S1' | S39 | A39 | S39 | A39 |
| place de la première clé de S1 ni utilisée ni attribuée | S11 | A11 | non | non |
| clé de S1'utlisée ? | non | non | S17' | A17' |
| Clé de S1' envoyée sur S3 ? | non | non | S18' | A18' |
| place de la première clé pour le décryptage dans S1 | S12 | A12 | non | non |
| Clé pour le décryptage dans S1' / A1'? | non | non | S12' | A12' |
| place de la dernière clé de S1 affectée au décryptage et non utilisée | S13 | A13 | non | non |
| nombre total de clés dans S1 ou S1' | S14 | A14 | S14 | A14 |
| dernier message envoyé serveur-appareil standard sans AR reçu | S15 | A15 | S15 | A15 |
| dernier message envoyé serveur-appareil (avec clé pour AR) sans AR reçu | S15bis | A15bis | S15bis | A15bis |
| dernier AR du message standard | S16 | A16 | S16 | A16 |
| dernier AR d'un message envoyé (avec clés pour AR) | S16bis | A16bis | S16bis | A16bis |
| Réf. de l'emplacement de la première clé de S3 non utilisée | S31 | A31 | non | non |
| clé utilisée ? | *S37* | *A37* | *S37* | *A37* |
| place de la première clé pour le décryptage du registre S3 | S32 | A32 | non | non |
| place de la dernière clé de S3 affectée au décryptage, et non utilisée | S33 | A33 | non | non |
| quantité de nombres aléatoires dans le registre S3 | S34 | A34 | S34 | A34 |
| clé servant au décryptage | non | non | S32' | A32' |
| drapeau de copie sur l'appareil | S35 | N/A | S35 | N/A |
| registre A3 modifié depuis dernière synchro avec le serveur | non | A35 | non | A35 |
| drapeau de copie sur l'autre appareil | S36 | A36 | S36 | A36 |
| identifiant de l'autre appareil | S38 | A38 | S38 | A38 |
| identifiant d'un troisième appareil | S38bis | A38bis | S38bis | A38bis |
| dernier message envoyé à un appareil | N/A | A40 | N/A | A40 |
| dernier message envoyé avec clé pour AR sans AR reçu | N/A | A40bis | N/A | A40bis |
| dernier AR envoyé à un appareil | N/A | A41 | N/A | A41 |
| dernier AR envoyé à un appareil pour un message avec clé pour AR | N/A | A41 bis | N/A | A41 bis |
| faut-il signer une demabde d'envoi de clé ? | S42 | A42 | S42 | A42 |
| une demande de clé reçue doit-elle être signée ? | S42bis | A42bis | S42bis | A42bis |

**Moyens de transmissions entre dispositifs**

Des algorithmes de compression et de décompression de données peuvent être utilisés respectivement à l'envoi et à la réception de toute donnée échangée entre deux éléments du système.

Les étapes relatives à l'envoi et à la réception des données peuvent être réalisées selon le même protocole de communication, ou selon des protocoles de communication différents ; ces protocoles pouvant être par exemple, et de façon non exclusive, transmission filaire ou par contacteurs permettant d'établir un lien filaire, non filaire, e.g. WiFi, 4G, 5G, WiMAX, Lora ou Sigfox.

**Groupes d'appareils**

Appareils médiateurs

Les serveurs et appareils peuvent, selon l'invention, être configurés pour limiter les communications sécurisées entre certains appareils en associant uniquement des clés à usage unique à des paires d'appareils respectant certaines règles, telles que, de façon non limitative, des paires d'appareils autorisés à communiquer de manière sécurisée, ou des groupes d'appareils autorisés à communiquer entre eux. L'utilisation, en particulier d'appareils médiateurs tels que des « doubles lecteurs » devant s'interposer dans une communication entre deux appareils standards, permet en effet de réduire le nombre de couples d'appareils dont les communications sont à sécuriser ; les appareils médiateurs et les appareils standards appartenant alors chacun à deux groupes différents. S'il y a n appareils standards ne communiquant qu'avec les appareils médiateurs et le serveur et N appareils médiateurs communiquant entre eux, avec le serveur et avec chaque appareil standard, le nombre de liaisons à sécuriser, y compris les liaisons avec le serveur sont :

$$(N+n) + N*n + N*(N-1)/2$$

alors que si les appareils standards communiquent directement les uns avec les autres, il y a

$$n + n*(n-1)/2 = n * (n+1)/2$$

liaisons à sécuriser ; si par exemple, il y a x appareils médiateurs pour un appareil standard, le ratio entre le nombre de liaisons à sécuriser et le nombre de liaisons à sécuriser s'il n'y a pas d'appareil médiateur est, si n est grand, comparable à

$$2x + x^2$$

Donc, l'invention permet par l'utilisation d'un petit x, des économies substantielles de clés à disposer sur les appareils et notamment sur les appareils standards ; x peut en effet être très petit si les appareils médiateurs sont, par exemple, des distributeurs de billets, les appareils standards étant des cartes de crédit, ou seulement petit si les appareils médiateurs sont, par exemple, des appareils portatifs permettant la communication entre deux appareils standards, ces appareils standards étant sous format de carte de crédit.

Groupements par régions ou groupes d'utilisateurs

Dans une autre configuration, les appareils standards peuvent tous communiquer directement entre eux au sein d'un même groupe, mais aussi peuvent tous communiquer avec un groupe de médiateurs communs. Une telle configuration peut servir à des usages de transfert d'argent, directement d'appareil à appareil au sein d'un même pays, les appareils étant par exemple sous format de calculatrice avec clavier mais nécessitant un médiateur tel qu'un appareil au format terminal de paiement d'un commerçant pour fonctionner à l'étranger.

Groupements par groupes d'utilisateurs avec utilisation de médiateurs

Dans encore une autre configuration, les appareils peuvent appartenir à trois types de groupes : les appareils des groupes du premier type pouvant communiquer entre eux, au sein d'un même groupe par l'utilisation d'un médiateur appartenant à des groupes du second type, ou bien par un médiateur appartenant à un unique groupe du troisième type. Les groupes des premiers types peuvent être par exemple des cartes à puces d'un même pays contenant des registres permettant de comptabiliser des sommes d'argent ou représentant des documents officiels ou commerciaux et nécessitant des communications sécurisées entre elles pour transmettre lesdits documents ou sommes d'argent entre appareils ; le second type de groupes étant alors des groupes de lecteurs d'un même pays permettant de faire communiquer les cartes à puces du pays entre elles et de lire les informations qu'elles portent, et les appareils du groupe du troisième type permettant de faire communiquer les appareils de n'importe quel groupe du premier type entre eux et d'y lire les informations, les appareils du troisième groupe étant par exemple possédés par les banques, bureaux de change ou commerces du monde pouvant avoir des clients étrangers. Le nombre d'appareils du second type et du troisième type pourra être maintenu bas si ceux-ci ne contiennent que des informations qui peuvent être perdues, pouvant alors être exclues de leur groupe, par exemple à l'initiative de l'opérateur du système, tout en conservant la possibilité de communiquer de façon sécurisée avec le serveur.

## Dispositifs

Certaines procédures décrites dans cette invention font état de communication parfois, entre deux appareils, parfois entre un appareil et un serveur, parfois entre un appareil et tout aussi bien un serveur qu'un appareil. Nous désignerons par dispositif un objet qui peut être indifféremment un serveur ou un appareil.

## Chiffrage

Un message chiffré devinable envoyé par un appareil ou serveur sur une ligne non sécurisée pourrait être intercepté, et les clés de chiffrage pourraient alors être calculées puis réutilisées, par un acteur malveillant non pas pour chiffrer un autre message, cet acteur malveillant n'ayant pas d'intérêt à rendre secret un message qu'il connaît, mais pour signer, avec des clés authentiques d'un appareil, un message dont il serait l'auteur. Il n'est par ailleurs pas nécessaire que l'acteur malveillant ait de la chance de deviner le message exact mais il suffit que celui-ci puisse restreindre l'univers possible des messages envoyés ou bien soit capable de restreindre l'univers des messages envoyés à un univers probable (c'est-à-dire pour lequel la probabilité d'appartenance du message est non négligeable) de messages envoyés car il pourra alors déduire de ces univers probables de messages envoyés des univers probables de clés qu'il pourra utiliser pour former des messages cryptés qu'il pourra envoyer les uns après les autres à un appareil du système, jusqu'à ce que celui-ci accepte un desdits messages ; la probabilité de succès dans un temps raisonnable de ladite méthode étant alors non négligeable non plus.

Le système peut cependant utiliser des ensembles de clés distincts pour le chiffrage des messages qui peuvent être devinés, des ensembles de clés pour utiliser les signatures entre appareils, cet ensemble de clés étant semblable techniquement à l'ensemble de clés destiné aux signatures de communications entre appareils, mais réservé au chiffrage de données entre appareils dans la mesure où ces communications chiffrées sont aussi signées pour que toute clé de chiffrement ne soit utilisée qu'une fois par le système.

Alternativement, le chiffrage des données entre appareils peut être effectué de telle sorte qu'il ne révèle pas les clés utilisées s'il est intercepté chiffrant un message qui peut être deviné. Ceci est possible si le chiffrage est fait à l'aide d'au moins deux clés chiffrant successivement les données échangées. Par exemple, une première clé chiffrant un message une première fois, puis une seconde clé chiffrant ce message chiffré. L'interception d'un tel message devinable chiffré plusieurs fois pourra cependant indiquer une relation entre les clés utilisées.

Le chiffrage des messages devinables est donc de préférence fait par l'utilisation d'une fonction de cryptage appliquée successivement, de préférence deux fois, au message entier avec des clés à usage unique de taille au moins égale à celle du message et extraites du même ensemble de clés que les clés affectées aux signatures entre appareils, ces clés étant de préférence utilisées qu'une seule fois par le système pour effectuer un tel cryptage. On peut néanmoins aussi utiliser comme fonction de cryptage la fonction XOR mais aussi une fonction de cryptage symétrique ou asymétrique telle que par exemple AES, Blowfish, DES, Triple DES, Serpent, ou Twofish utilisant la clé à usage unique ou toute autre fonction de combinaison ou de cryptage. On peut aussi utiliser deux fonctions différentes pour chacun des deux chiffrages successifs. Les informations envoyées cryptées par une clé à usage unique sont de préférence précédées des identifiants, en clair des clés utilisées pour le chiffrage. Si le message chiffré est plus long que les clés disponibles pour un tel chiffrage; plusieurs clés peuvent aussi être utilisées pour former, une fois concaténées une seule grande clé. Dans ce cas, l'identifiant de la clé utilisée pour le cryptage doit contenir les identifiants de toutes les clés utilisées.

Le chiffrage de messages ne pouvant être devinés est fait, de préférence à l'aide d'une fonction XOR appliquée une seule fois au message à chiffrer avec une clé à usage unique de taille égale à celle du message, ou alternativement par une autre fonction de chiffrage telle que ES, Blowfish, DES, Triple DES, Serpent, ou Twofish utilisant la clé à usage unique ou toute autre fonction de combinaison ou de chiffrage.

## Signatures

La cryptographie moderne utilise couramment des 'signatures' qui permettent de vérifier si des données proviennent d'un émetteur connu de l'appareil qui reçoit la donnée. Ces techniques de signatures font souvent appel à des systèmes de clés asymétriques. Dans l'invention, et pour pallier d'éventuelles faiblesses associées à l'utilisation de clés asymétriques, on utilise de préférence des systèmes de signature utilisant des clés à usage unique.

La signature d'un message qui ne peut être deviné, du crypté d'un nombre ayant été généré aléatoirement par exemple, peut être moins complexe que la signature d'un message qui peut être deviné par une tierce partie. En effet, la connaissance du message et de sa signature peut apporter des informations sur la clé à usage unique utilisée par la signature et donc éventuellement permettre à la tierce partie d'intercepter le message et sa signature puis de les remplacer par d'autres tout aussi signés. On peut deviner un message en l'interceptant mais aussi en faisant des hypothèses sur sa composition : par exemple, si le message est la lecture d'un compteur, on peut deviner ladite lecture ou bien choisir au hasard l'une des quelques lectures possibles du dudit compteur.

La signature d'un message qui ne peut être deviné est donc de préférence formée d'un haché crypté par une clé à usage unique concaténée à l'identifiant de ladite clé.

La signature d'un message qui peut être deviné est de préférence formée du crypté d'un nombre ayant été généré aléatoirement par l'émetteur du message et du crypté du haché d'un combiné du message à signer avec le nombre généré aléatoirement par l'émetteur concaténés aux identifiants des deux clés ayant servi aux cryptages. La vérification de la signature peut se faire en décryptant le nombre aléatoire, le recombinant alors au message signé puis en vérifiant que le haché de ce combiné est bien le décrypté du haché reçu. La signature nécessite alors l'utilisation de deux clés à usage unique : l'une pour chiffrer le nombre aléatoire, l'autre pour chiffrer le haché.

Le nombre aléatoire peut être remplacé par une clé à usage unique qui n'a alors plus besoin d'être cryptée et qui n'est pas incorporée, hormis son identifiant, à la signature ; la signature est alors formée du crypté du haché du message combiné à une clé à usage unique, concaténé à l'identifiant de ladite clé à usage unique et à l'identifiant de la clé à usage unique utilisée pour chiffrer le haché.

Par crypté, il faut comprendre un chiffrage de l'élément crypté par une clé à usage unique précédé ou suivi de l'identifiant de ladite clé.

Par combiné de deux éléments, il faut comprendre tout message formé des deux éléments combinés ; tels que par exemple, l'un concaténé à l'autre ou l'un crypté par un procédé de cryptage symétrique utilisant l'autre pour clé.

### Accusé de réception

Intérêt d'avoir des accusés de réception pour les messages ordinaires

L'invention met en œuvre des procédures contenant la communication d'identifiants de clés d'un appareil ou d'un serveur à un autre appareil et aussi le marquage de clés comme utilisées. Un appareil électronique externe au système pourrait ainsi malicieusement demander à un appareil ou un serveur du système de lui envoyer des messages signés ou cryptés à seule fin d'épuiser la réserve disponible de clés uniques de l'appareil du système. Il pourrait aussi intercepter des messages envoyés cryptés ou signés à destination d'un appareil du système ou du serveur afin de faire renvoyer de nouveau le message initial et ainsi contribuer à l'épuisement des réserves de clés. Le système est donc de préférence agencé pour que les appareils ou le serveur ne renvoient pas de nouveau message ordinaire, c'est à dire un message qui n'est pas un accusé de réception, utilisant des clés à usage unique à un même appareil ou à un même serveur, avant d'avoir reçu un accusé de réception du message ordinaire précédent. Pour limiter le nombre de clés présentes sur chaque appareil pour communiquer avec chacun des autres appareils du système, le système peut cependant permettre l'envoi d'un message signé d'un premier appareil vers un second appareil, même si le second appareil n'a pas forcément suffisamment de clés pour envoyer un accusé de réception. Le premier appareil, s'il veut pouvoir apporter par la suite au second appareil des clés qui lui permettront d'envoyer un accusé de réception, doit donc, si possible, être capable d'envoyer un message de transfert de clés même s'il n'a pas encore reçu l'accusé de réception du message précédent. On identifie alors deux types de messages ordinaires, le premier étant celui des messages pouvant transférer des informations et transférant des clés nécessaires à un renvoi d'un accusé de réception, le second type regroupant tous les autres messages ordinaires. Les messages de même type ne sont de préférence envoyés que si le message précédent du même type a donné lieu lui-même à la réception d'un accusé de réception ; les messages de transfert de clés pourront transférer suffisamment de clés pour apporter les clés nécessaires aux accusés de réception, ces messages de transfert pourront être du premier type. Par transfert des clés, il faut comprendre ici communiquer à un autre appareil les références de clés à usage unique attribuées par le serveur à la sécurisation des communications avec ledit autre appareil.

Conservation des messages envoyés jusqu'à réception de l'accusé de réception De préférence, les appareils et serveurs gardent en mémoire, leur dernier message envoyé d'un même type jusqu'à ce qu'il y ait réception d'un accusé de réception pour ledit message.

Conservation du dernier accusé de réception envoyé

De préférence, les appareils et serveurs gardent dans un registre, les accusés de réception envoyés à la suite de la réception du dernier message d'un même type, de telle sorte qu'ils puissent renvoyer ledit accusé de réception s'ils devaient recevoir de nouveau le même message. De préférence, les appareils et serveurs gardent aussi dans un registre les messages correspondant aux accusés de réception conservés, ou alternativement un autre moyen de reconnaître lesdits messages, tel que leur haché, de façon à pouvoir vérifier si le message reçu a déjà donné lieu à la préparation d'un accusé de réception.

Effacement du dernier accusé de réception envoyé

Un dispositif, en écrivant un nouvel accusé de réception efface de son registre l'accusé de réception envoyé précédemment. De plus, si un message est reçu, nécessitant l'envoi d'un accusé de réception, mais que l'appareil recevant ledit message ne possède pas suffisamment de clés pour en accuser réception, un accusé de réception non signé est inscrit dans le registre du dernier accusé de réception et la référence du message auquel il se rapporte est inscrite dans le registre prévu à cet effet, sans que l'accusé de réception non signé ne soit envoyé. Ceci permet à l'appareil qui reçoit de nouvelles clés de signer puis d'envoyer l'accusé de réception d'un message reçu précédemment pour lequel aucun accusé de réception n'a encore été envoyé.

Contenu du message d'accusé de réception

L'accusé de réception sera de préférence un message signé. Il contiendra de préférence un identifiant du message pour lequel il accuse réception, cet identifiant pouvant être le haché dudit message. L'accusé de réception peut aussi contenir d'autres informations telles qu'une réponse au message envoyé, des informations sur l'état du système, ou des informations de transfert ou d'inversion du rôle de clés, le rôle d'une clé étant, selon le dispositif sur lequel elle est située, soit de chiffrer, soit de déchiffrer un message

Concomitance entre l'écriture du message reçu et l'inscription de son accusé de réception

Pour éviter qu'un même message ne tente de modifier les mêmes registres à plusieurs reprises, si le serveur ou bien l'appareil recevant un message doivent accomplir une modification de leurs registres suite à la réception dudit message, ces modifications seront, de préférence toutes validées au moment de l'inscription de l'accusé de réception dans le registre prévu à cet effet, que cet accusé de réception soit signé ou non.

Vérification de modification de registre d'un autre dispositif

Afin de s'assurer que toute modification de registre initiée par un premier dispositif, appareil ou un serveur, a déjà été prise en compte par un second dispositif auquel il a envoyé un message autre qu'un accusé de réception, le premier dispositif vérifie qu'il a bien reçu l'accusé de réception des messages précédents qu'il a envoyés au second dispositif.

**Cas d'erreur détectée dans le chiffrage**

Les messages envoyés d'un appareil ou d'un serveur vers un autre appareil ou un serveur peuvent être interceptés et modifiés, pouvant faire apparaître des incohérences ou des tentatives de fraudes lors de la réception desdits messages. Ces messages pourraient même être interceptés, modifiés et envoyés ainsi vers l'autre appareil ou serveur de nombreuses fois. Cependant, si le message est constitué d'un nombre aléatoire crypté suffisamment grand, par exemple sur 128 bits, ou bien si le nombre aléatoire utilisé pour former la signature dans le cas des messages 'devinables' est suffisamment grand, par exemple un nombre 128 bits, le temps nécessaire pour décoder un nombre important de faux messages transmis à l'appareil, de telle sorte qu'au moins l'un des messages frauduleux ait une chance sur un million de ne pas être reconnu frauduleux par l'appareil, serait, si celui-ci peut faire 1 milliard de vérifications par seconde, de l'ordre de $4 \cdot 10^{18}$ jours. Si alternativement, le temps alloué au calcul du déchiffrage est restreint, par exemple à 1/100ième de seconde à la suite de l'envoi d'une commande envoyée à l'appareil par l'utilisateur quand il appuie sur un bouton, et limité à par exemple 1 seconde par jour au total, il faudra, en utilisant des clés de 64 bits, 50 ans d'utilisations de l'appareil pour que celui-ci ait une chance sur 1 million d'accepter comme non frauduleux un message frauduleux qui lui serait envoyé pendant tous les moments de fonctionnement de son processeur de déchiffrage. L'appareil ou le serveur recevant de tels messages frauduleux, de préférence ne marquera donc pas les clés utilisées pour ledit message comme frauduleux. Il peut cependant envoyer un message autre qu'un accusé de réception pour signaler à l'autre appareil ou serveur qu'il reçoit de tels messages.

**Les clés**

Rôle attribué aux clés

Deux appareils, ou bien un appareil et un serveur, pourraient s'envoyer des messages l'un à l'autre simultanément, c'est à dire avant d'avoir reçu le message envoyé par l'autre appareil ou serveur, et donc sans savoir quelles clés ont déjà été utilisées par l'autre appareil ou serveur. Afin d'éviter que deux appareils ou serveurs s'échangent des messages utilisant les mêmes clés, le système selon l'invention est de préférence organisé pour que les clés non utilisées soient, sur chaque appareil, identifiables comme clés pouvant servir à crypter des données plutôt que de les décrypter. Cette identification sera de préférence réversible, un appareil ou un serveur pouvant marquer toute clé, ou tout groupe de clés identifié initialement comme réservé au cryptage, comme réservé au décryptage et en informer l'autre appareil ou serveur par un message de préférence signé et éventuellement crypté, cet appareil identifiant, à réception dudit message la clé ou le groupe de clés comme disponible pour le cryptage.
Ce changement d'identification de clés sera de préférence effectué suite à une demande en clair envoyée par l'autre appareil ou serveur, mais pourra aussi être effectué spontanément ou à la suite d'une demande cryptée puis signée ou signée puis cryptée. L'appareil ou le serveur pourra vérifier avantageusement, avant d'effectuer un tel changement qu'il lui restera au moins une clé qui peut servir à envoyer un accusé de réception signé au prochain message qu'il recevra. De préférence, l'appareil ou le serveur ne changeront pas le marquage d'un nombre suffisant de clés réservées au cryptage avec l'autre dispositif afin de disposer du nombre de clés nécessaires pour répondre ou accuser réception à un éventuel futur message.

Emplacement des clés

L'invention permet au serveur d'attribuer à un second appareil des clés se trouvant déjà sur un premier appareil. Il peut donc se trouver des situations où des clés ont été utilisées par un appareil pour chiffrer ou signer un message sans que le second appareil, destinataire dudit message, ait été informé que le premier appareil peut utiliser ces clés. Les clés utilisées par le premier appareil ne se trouveront alors pas dans le registre A3 ou A3' du second appareil mais dans son registre A1 ou A1' de clés pouvant être utilisées pour chiffrer les communications avec le serveur. Un appareil vérifiant une signature ou déchiffrant un message pourra utiliser de telles clés disposées sur les registres A1 ou A1' et valider la signature, tout aussi bien que si la ou les clés utilisées apprenaient au registre A3 ou A3' des clés dédiées aux communications avec un autre appareil.

Message de transfert de clés

Les messages de transfert de clés permettent de communiquer des nouvelles clés à des appareils ou bien de communiquer à un autre appareil que telle ou telle clé est dédiée à la communication avec un autre appareil, ou de changer le rôle d'une clé affectée au déchiffrage en une clé affectée au chiffrage. Afin d'éviter que des clés manquent à l'appareil recevant un tel message de transfert de clés pour émettre un accusé de réception audit message, ces messages transfèrent chacun, de préférence, un nombre de clés au moins suffisant à ce que l'appareil recevant ledit message puisse en renvoyer un accusé de réception.

Demande de clés

L'invention permet au serveur d'attribuer à un second appareil des clés se trouvant déjà sur un premier appareil. Il peut donc se trouver des situations où des clés ont été attribuées à un second appareil sans que le premier appareil en ait été informé et où le premier appareil souhaite communiquer avec le second appareil sans connaître quelle clé il peut utiliser pour sécuriser ladite communication. Pour cette raison, ou pour toute autre raison, le premier appareil de préférence peut faire une demande en clair, signée ou non, de listes de clés à usage unique communes aux deux appareils. Cette demande pourra éventuellement être assortie d'une quantité idéale de clés requises mais aussi d'une quantité minimum de clés requises. Le second appareil recevant une telle demande d'identifiants de clés envoie en réponse un message de préférence signé, mais aussi éventuellement crypté contenant les identifiants des clés requises. Pour éviter que des appareils malveillants ne sollicitent sans cesse des transferts de clés vers un troisième appareil, un mécanisme de limitation du nombre de clés transférés peut être introduit. Un tel mécanisme peut consister en un nombre limité de clés transférables à la suite d'une première requête reçue par un troisième dispositif, dix par exemple. Toute demande ultérieure devant alors être signée. Les appareils et serveurs conservant l'information indiquant si la demande doit être signée sur les registres S42, S42bis, A42, ou A42bis. Si la demande de clé est signée, les clés peuvent être transférées dans le message d'accusé de réception.

Marquage de l'utilisation des clés

Les clés utilisées pour crypter un message sont de préférence marquées comme utilisées par l'appareil qui crypte la donnée, puis à la réception du message par l'appareil qui les décrypte. De préférence, le rôle attribué à une clé utilisée ne peut être modifié. Le marquage, en particulier pour l'invention dans sa première version, peut être effectué par la position relative de ladite clé par rapport un curseur dynamique, le curseur délimitant les clés usagées des clés non encore utilisées.

Dans la première version de l'invention, une clé utilisée au chiffrage est marquée comme utilisée par modification de son registre S11, A11 ou A31 associé ; une clé utilisée au déchiffrage est marquée comme utilisé par modification de son registre S13, A13 ou A33 associé. De préférence, les registres S35, et S37 ou A37 sont aussi activés.

Dans sa seconde version, une clé utilisée au chiffrage ou bien au déchiffrage est marquée comme utilisée par modification de son drapeau d'utilisation S17', A17', S37 ou A37, cette modification étant accompagnée de préférence par l'activation du drapeau serveur.

**Procédures non parallèles**

Les procédures de communication sécurisées décrites ci-dessous sont de préférence accédées de façon centralisée pour éviter que deux processus concurrents accédant les mêmes registres de clés ne puissent l'un envoyer des clés à un appareil ou serveur pendant que l'autre demande d'en recevoir du même appareil ou serveur.

**Concomitance**

Certains appareils électroniques offrent la possibilité de rendre concomitantes les modifications de plusieurs registres. La préparation et l'envoi des messages entre divers appareils et serveurs nécessitent parfois la modification des registres décrits dans ce système et l'inscription du message préparé dans un registre contenant un dernier message envoyé n'ayant pas reçu d'accusé de réception.

Pour éviter que ces registres ne soient modifiés à nouveau si le message devait être préparé de nouveau, les registres modifiés de par la création et la signature d'un message, y compris le registre contenant un dernier message envoyé n'ayant pas reçu d'accusé, sont modifiés de préférence en même temps.

De même, les messages reçus peuvent entraîner la modification de registres dont le registre contenant le dernier accusé de réception. Les registres devant être modifiés lors de la réception d'un message, y compris le registre contenant un dernier message pour lequel un accusé a été envoyé, sont, de préférence, modifiés en même temps.

**Procédures**

L'invention concerne encore une
Procédure d'allocation et de synchronisation de clés à usage unique pour la communication entre appareils
à travers une liaison non sécurisée, cette synchronisation visant à installer sur l'appareil des clés à usage unique lui permettant de communiquer avec d'autres appareils, l'appareil et le serveur appartenant à un système, le procédé comportant :

1. de préférence, l'établissement par l'appareil à partir de son ensemble A3 ou A3' de clés dédiées à la sécurisation entre appareils, d'un ensemble d'identifiants de clés à usage unique dont le 'drapeau serveur' A35 est activé,
2. de préférence, l'inscription dans le registre A15 de l'appareil d'un message signé contenant des identifiants de l'ensemble établi à l'étape précédente ainsi que les informations (A31, A32, A33, A34, A36, A37 ou A32', A36 et A37) relatives au registre A3 ou A3' dont le drapeau serveur est activé, puis l'envoi dudit message,
3. à la réception par l'appareil d'un accusé de réception, l'effacement de son registre A15,
4. à la réception par l'appareil de nouvelles clés à usage unique en provenance du serveur : la vérification de la signature du message reçu ainsi que le déchiffrage des clés reçues et le marquage comme utilisées des clés utilisées pour la signature et le chiffrement, et l'inscription des clés reçues dans le registre A3 ou A3' et leurs registres afférents (A31 à A38 ou A32', A34, A37 et A38) de l'appareil,
5. l'inscription dans le registre A16 de l'appareil d'un accusé de réception, puis l'envoi au serveur dudit accusé de réception.

Ces échanges s'effectuent de préférence en clair, accompagnés d'une signature de l'appareil ou du serveur envoyant l'information, ladite signature étant vérifiée par l'appareil recevant ladite information, les clés reçues à l'étape 4 étant de préférence chiffrées à l'aide de clés à usage unique du registre S1 ou S1' servant à chiffrer les communications entre l'appareil et le serveur.

Les étapes 3 et 4 peuvent être répétées plusieurs fois si l'appareil reçoit plusieurs messages porteurs de clés.

Le procédé comporte préférentiellement entre les étapes 2 et 3 :

suite à la réception des identifiants de clés de l'ensemble établi à l'étape 1, la vérification de la signature du message, la mise à jour par le serveur de son ensemble S3 ou S3' ainsi que des registres S30, S31, S32, S33, S34, S36, S37 ou S32', S36 et S37 et S4 et l'envoi

d'un accusé de réception,

puis entre les étapes 2 et 4 :

i. à l'aide, entre autres de l'ensemble S4, et en tenant compte des clés S1 nécessaires sur le serveur pour signer le message en préparation et en tenant compte du fait que toute clé transmise d'un registre S1 d'un autre appareil nécessitera pour être chiffrée une clé de même taille du registre S1 de l'appareil, le serveur calcule ou recalcule un nombre optimal de clés à usage unique à utiliser par l'appareil pour communiquer avec chacun des autres appareils ; ce nombre pouvant correspondre par exemple à un certain multiple du nombre de clés utilisées dans la dernière semaine augmenté du nombre de clés utilisées dans le dernier mois si ce nombre est plus grand et encore augmenté d'une constante, ce nombre une fois calculé peut être inscrit sur ce même registre S4,

ii. l'utilisation par le serveur de ce nombre optimal et du calcul, à partir des registres S31, S32, S33 et S34 ou S37, pour chaque autre appareil du nombre de clés à usage unique non utilisées, afin de déterminer la quantité de clés à associer à l'appareil pour la communication avec chaque autre appareil du système en plus des clés qui lui sont déjà associées à cet effet.

iii. l'association par le serveur à l'appareil de clés à usage unique présentes sur les ensembles S1 ou S1' des autres appareils identifiés à l'étape précédente et avec lesquels ledit appareil doit obtenir de nouvelles clés de communication, cette association de clés par le serveur consistant de préférence à : 1) ajuster les registres S3, ou S3', S31, S32, S33, S34, S35 et S38 des autres appareils pour tenir compte des clés nouvellement attribuées, ainsi que les registres S11 ou S17' des autres appareils pour refléter la mise à disposition des clés à d'autres appareils, ces ajustements des registres S3, S31, S32, S33 , S34, S35 et S38 consistant à créer un nouveau registre S3 ou S3' en allouant de l'espace mémoire audit nouveau registre et, pour l'invention dans sa première version : en faisant pointer le registre S3 vers les nombres du registre S1 qui lui sont attribués, en initialisant les registres S31 et S32 à '0' et S33 à la quantité de nombres constituant la clé, en mettant le registre S35 à la valeur booléenne 'faux' et en inscrivant dans S38 l'identifiant de l'appareil communiquant avec le serveur ; et pour l'invention dans sa seconde version en inscrivant dans le registre S3' l'identifiant de la clé du registre S1' qui lui est attribuée, en initialisant sur vrai le registre booléen S18' indiquant si la clé de S1' est utilisée sur un registre S3', en mettant le registre S35 indiquant si la clé a été copiée sur l'appareil, à la valeur booléenne 'faux' et en inscrivant dans S38 l'identifiant de l'appareil communiquant avec le serveur ; et 2) pour chacun des registres S3 ou S3' créés à l'étape précédente, créer des registres S3 ou S3' associés à l'appareil contenant les mêmes informations que le registre S3 ou S3' de l'autre appareil mais dans lesquels les registres S38 de l'identifiant de l'autre appareil comportent l'identifiant de l'autre appareil et dans lesquels dans le registre S39 est inscrit une copie des nombres aléatoires des registres S1 ou S1' auxquels la clé se réfère.

iv. l'établissement par le serveur, à partir de la liste des ensembles S3 ou S3' modifiés à l'étape précédente, d'un ensemble de clés associées audit appareil et marquées comme non présentes dans son ensemble A3, mais présentes dans l'ensemble S1 ou dans l'ensemble S3 (S1' ou S3') des autres appareils.

v. l'association des clés à leurs identifiants c'est-à-dire leur position et taille dans le registre A1 (A1') des appareils ainsi que l'identifiant de l'appareil auquel chacune de ces clés est associée, et le regroupement éventuel de ces informations en groupes, les informations relatives à chaque clé se trouvant toutes dans chacun de ces groupes,

vi. la rédaction d'un message contenant, pour un groupe pour lequel un tel message n'a pas encore été rédigé, les éléments déterminés à l'étape précédente en un message, les clés (et non leurs identifiants) étant chiffrées puis la signature dudit message, les clés du registre S1 ou S1' utilisées pour le chiffrement, ainsi que pour la signature, étant marquées comme utilisées et le message étant inscrit dans le registre S15 du serveur,

vii. l'envoi du message précédent,

viii. à la réception d'un accusé de réception pour le message précédent, la suppression de son registre S15 de l'un des messages n'ayant pas reçu d'accusé de réception, et la mise à jour par le serveur de ses registres S35 ou S36,

ix. l'envoi d'autres groupes formés à l'étape vi restant à envoyer s'il en reste à envoyer, en effectuant de nouveau les étapes vii et viii de la procédure.

Cette procédure pouvant être restreinte aux clés appartenant à un sous-groupe limité d'autres appareils, par exemple aux deux derniers autres appareils avec lesquels l'appareil a communiqué en utilisant des clés à usage unique, ou aux appareils en attente d'un accusé de réception, ou encore aux appareils auxquels n'est associée aucune clé, soit parce que l'un des deux appareils a été introduit récemment dans le système des appareils pouvant communiquer avec le serveur, soit parce que des communications sécurisées ont déjà eu lieu entre les deux appareils ; on pourra par exemple disposer de 8 clés dans le premier cas, représentant 2 clés qui resteront sur l'appareil plus 2 clés qui pourront être transférées à l'autre appareil par un message contenant 4 clés, ou bien 28 clés si les appareils ont déjà communiqué, représentant 12 clés qui resteront sur l'appareil plus 12 clés qui pourront être transférées à l'autre appareil par un message contenant 4 clés, ou même encore plus si les deux appareils communiquent souvent.

Procédure d'inversion du rôle des clés

Les clés étant attribuées soit au chiffrage, soit au déchiffrage, il peut y avoir des situations où des clés partagées entre deux dispositifs, appareils ou serveurs A et B, sont toutes attribuées au chiffrage sur A et au déchiffrage sur B, alors que des données doivent être chiffrées sur B pour être envoyées à A.

Dans ce cas, le rôle des clés peut être inversé et on parlera alors dans la suite indifféremment d'inversion de rôle de clés et d'inversion de clés. Une inversion de clés peut se faire en suivant la procédure suivante :

1. le dispositif A vérifie que son registre S15bis, A15bis ou A40bis contenant le dernier message envoyé au dispositif B n'ayant pas reçu d'accusé de réception, est vide,
2. A constitue une liste de clés marquées pour le chiffrage et présentes dans le registre des clés de l'autre appareil dédié aux communications entre appareils, qu'il souhaite marquées pour le déchiffrage, identifie des clés nécessaires à la signature du message qu'il souhaite envoyer, et si le registre A42 ou S42 indiquant que les messages de demandes de clés à destination de l'autre appareil doivent être signés, identifie un nombre supplémentaire de clés permettant une telle signature afin de ne pas inverser leur rôle. Il inclut dans la liste des clés dont il souhaite changer le rôle, des clés qui seront utiles à l'envoi par B d'un accusé de réception au message en cours de préparation ; et enfin, A annule la procédure s'il ne dispose pas de clés dont le rôle peut être inversé,
3. le dispositif A constitue le message formé de la liste précédente, signe ledit message, le place dans son registre des messages d'inversion de clés envoyées et n'ayant pas reçu d'accusé de réception S15bis, A15bis, S15bis ou A40bis et inverse dans ses propres registres le sens d'utilisation des clés envoyées et marque comme utilisée la clé qui a été employée à la signature,
4. A envoie le message,
5. le dispositif A reçoit un accusé de réception et supprime le message placé à l'étape 3 dans le registre S15bis, A15bis, S15bis ou A40bis.

De préférence, le dispositif B, à réception du message envoyé à l'étape 4 :

a. vérifie qu'un accusé de réception pour le message reçu n'a pas déjà été préparé, et envoie ledit accusé de réception si c'est le cas, puis termine ainsi la procédure,
b. vérifie la signature du message et le rejette si celle-ci n'est pas valide, la signature pouvant utiliser des clés présentes sur son registre S1 ou S1' qui contient aussi des clés dédiées aux communications entre le serveur et l'appareil,
c. marque comme clés de chiffrage les clés correspondant aux références envoyées, prépare un accusé de réception, utilise l'une d'elles pour rédiger la signature de l'accusé de réception au message reçu, marquant alors ladite clé comme utilisée puis inscrit l'accusé de réception dans le registre S16bis, A16bis, S16bis ou A41bis des accusés de réception des messages d'inversion ou de transfert de clés. Les modifications des registres sur *B* sont de préférence validées toutes en même temps, à la fin de cette étape.
d. le dispositif *B* envoie le message préparé à l'étape précédente.

Procédure de transfert de clés

Dans certains cas, une clé peut être présente sur un registre d'un dispositif, appareil ou serveur *A,* comme étant affectée au chiffrage de données avec un appareil B, sans que l'appareil *B* en soit informé; la clé étant tout de même présente sur *B* quoique non affectée à la communication avec *A,* l'appareil *A* peut envoyer un message à l'appareil *B* pour l'instruire de marquer lesdites clés comme dédiées à la communication avec *A.* La procédure suivante sera utilisée de préférence à cet effet :

1. *A* reçoit si nécessaire l'accusé de réception du message précédent dédié à l'envoi de clés n'ayant pas reçu d'accusé de réception et stoppe la présente procédure si l'accusé de réception n'est pas reçu,

2. Si *A* est connecté au serveur, il peut effectuer la procédure de synchronisation des clés entre serveur et appareil, éventuellement en restreignant cette procédure aux clés dédiées aux communications avec *B ou* aux clés dédiées aux communications avec les appareils dont *A* a reçu n messages et pour lesquels A n'a pas suffisamment de clés pour envoyer un accusé de réception,

3. *A* extrait de ses clés marquées pour communiquer avec *B* mais non présentes sur *B,* des clés nécessaires à l'envoi signé du message en cours de préparation par la présente procédure, et si le registre A42 indiquant que les messages de demandes de clés à destination de l'autre appareil doivent être signés, identifie un nombre supplémentaire de clés permettant une telle signature afin de ne pas les envoyer,

4. *A* change éventuellement le rôle de certaines de ses clés marquées pour communiquer avec *B* mais non présentes sur *B* en les marquant réservées pour le déchiffrage sur *A,*

5. *A* fait une liste de clés marquées pour le chiffrage par *B* et une autre liste de clés marquées pour le chiffrage par *A,* les clés de ces listes étant marquées pour communiquer avec *B* mais non présentes sur celui-ci,

6. *A* signe le message constitué des deux listes préparées ci-dessus à l'aide des clés identifiées à l'étape 2, et inscrit le message signé dans le registre affecté aux messages de transfert de clés n'ayant pas reçu d'accusé de réception,

7. *A* envoie le message,

8. *A* reçoit un accusé de réception et supprime le message du registre affecté aux messages de transfert de clés n'ayant pas reçu d'accusé de réception.

Les écritures dans les registres faites aux étapes 4 à 6 sont de préférence toutes rendues définitives à la fin de l'étape 6.

De préférence, à la réception du message envoyé par *A* à l'étape 7:

a. *B* ré-envoie l'accusé de réception situé dans le registre des accusés de réception des messages dédiés aux envois de clés, si le message reçu est celui pour lequel l'accusé de réception a déjà été placé dans le registre des accusés de réceptions,

b. *B* vérifie la signature du message, les clés ayant servi à ladite signature pouvant se trouver sur les registres des clés utilisées pour les échanges entre le serveur et l'appareil, et rejette le message si la signature n'est pas valide,

c. *B* efface le registre des accusés de réception des messages dédiés aux envois de clés,

d. *B* inscrit les clés utilisées pour la signature dans son registre des clés servant aux communications avec l'autre appareil, en marquant ces clés comme étant utilisées,

e. *B* inscrit les clés reçues dans le message dans son registre des clés servant aux communications avec l'autre appareil, en marquant ces clés comme étant inutilisées et inscrit aussi le rôle desdites clés reçues conformément au message reçu,

f. B prépare un accusé de réception du message, éventuellement des clés reçues marquées affectées au chiffrage et inscrit ledit accusé de réception dans le registre des accusés de réception affectés aux messages de réception de clés,

g. *B* envoie l'accusé de réception.

Les écritures dans les registres faites aux étapes b à d sont de préférence toutes rendues définitives à la fin de l'étape d.

Procédure de mise en place de nouvelles clés à usage unique sur un appareil à partir d'un serveur

L'invention a également pour objet, selon un autre de ses aspects, un procédé de mise en place de nouvelles clés à usage unique sur un appareil à partir d'un serveur, le procédé comportant :

1. de préférence, effectuer la connexion dans un environnement sécurisé, de l'appareil au serveur, et retenir physiquement l'appareil dans ledit environnement jusqu'à ce que la procédure soit terminée, puis calculer le nombre de clés restant dans le registre de clés S1 ou S1' pour savoir s'il en reste suffisamment pour envoyer au moins 2 messages signés, et enfin envoyer à l'appareil un message sécurisé pour signaler que l'appareil est sécurisé,

2. s'il reste sur le registre S1 ou S1' suffisamment de clés pouvant servir à la communication avec l'appareil pour qu'après la synchronisation éventuelle, l'appareil et le serveur puissent s'échanger un message signé, effectuer de préférence la procédure de synchronisation entre l'appareil et le serveur en omettant de chiffrer les clés, puis vérifier que le message précédent d'envoi ou d'inversion de rôle de clés envoyé à l'appareil a bien donné lieu à la réception d'un accusé de réception en vérifiant que le registre S15bis du serveur contenant le dernier message de clés envoyé à l'appareil a déjà été effacé ; sinon renvoyer le dernier message et attendre un accusé de réception puis recommencer la procédure à partir de l'étape 1),

3. de préférence, la suppression par l'appareil des clés déjà utilisées de ses ensembles A1' et A3' ou A1 et A3 contenant les clés servant à la communication avec le serveur ou avec les appareils, puis la libération sur l'appareil et sur le serveur d'espace mémoire occupé par les clés supprimées, et la communication au serveur de l'espace mémoire disponible sur l'appareil par un message signé,

4. à l'aide de l'ensemble des registres situés sur le serveur, le calcul par le serveur du nombre de nouvelles clés à usage unique qui peuvent être placées sur l'appareil dans sa liste A1' ou A1 de clés dédiées à la communication avec le serveur, le nombre de clés à placer sur l'appareil étant déduit du registre S4, de l'espace mémoire disponible sur l'appareil reçu dans un message signé, ainsi que la place qu'il convient de conserver disponible à la création de nouveaux registres A3 ou A3' dédiés à la sécurisation des communications entre appareils,

5. la génération, de préférence par un générateur de nombres aléatoires, de nouvelles clés,

6. la création d'un message en clair mais de préférence signé placé de préférence dans le registre S15bis du serveur contenant ces clés.

7. l'envoi à l'appareil du message préparé à l'étape précédente,

8. la réception du message par l'appareil et la copie des clés inscrites sur ledit message sur le registre A1' ou A1 contenant les clés servant à la communication avec le serveur, ainsi que la mise à jour éventuelle des registres A11, A12, A13 et A14, puis l'inscription dans le registre A16bis de l'appareil d'un accusé de réception et enfin l'envoi dudit accusé de réception au serveur,

9. la réception d'un accusé de réception de préférence signé envoyé par l'appareil, et ce peut-être avec une clé envoyée à l'étape 7, et l'enregistrement par l'appareil des clés inscrites sur le message, dans le registre S1 ou dans l'ensemble S1' situé sur le serveur servant à la communication entre le serveur et les appareils ainsi que la mise à jour éventuelle des registres S11, S12, S13 et S14 et l'effacement du registre S15bis du serveur,

10. de préférence, effectuer de nouveau la procédure de synchronisation entre l'appareil et le serveur en omettant de chiffrer les clés,

11. terminer la connexion dans un environnement sécurisé, puis autoriser l'appareil à quitter l'environnement sécurisé.

Les modifications de registres dont l'inscription de messages ou d'accusées de réception dans les registres A15bis, S15bis, A16 ou S16bis de l'appareil ou du serveur dans lesquels ils sont placés avant leurs envois, étant de préférence concomitantes au sein de chacune des étapes décrites ci-dessus.

Les étapes 6 à 9 peuvent être répétées si les clés créées à l'étape 5 sont scindées en plusieurs groupes, chacun de ces groupes de clés étant envoyé par des messages séparés.

Par «connexion dans un environnement sécurisé» entre l'appareil et le serveur, il faut entendre que soit ces derniers communiquent sur un canal de transmission sûr, étant par exemple directement connectés dans un environnement protégé contre de possibles interceptions de communication ou bien connectés dans un environnement sécurisé à un appareil communiquant avec le serveur par une connexion elle-même sécurisée telle qu'une ligne quantique. L'environnement protégé pourra par exemple et à titre d'illustration, être un local protégé par des vigiles et entouré de grillages métalliques permettant d'isoler ledit local des ondes radios.

De préférence, le procédé de mise en place de nouvelles clés dans un système selon l'invention dans sa première version comporte entre les étapes 2 et 3 :

i. éventuellement, l'envoi par le serveur à l'appareil, préférentiellement dans un message signé, de la liste des appareils dont ledit appareil peut supprimer les enregistrements sur son registre A3 ou A3' des clés destinées à sécuriser les communications entre appareil, cette liste comportant les identifiants des appareils pour lesquels le registre S5 indique que lesdits appareils ne doivent plus pouvoir communiquer avec ledit appareil, ou bien auxquels est associé un nombre de clés excessif, c'est-à-dire par exemple supérieur de 40% au nombre de clés optimal inscrit sur le registre S4.

ii. éventuellement, la suppression par l'appareil de ses registres A3 ou A3' des informations relatives aux appareils indiqués à l'étape i,

Procédure d'envoi d'un accusé de réception d'un message reçu pour lequel aucun accusé de réception n'a été envoyé.

Les étapes suivantes sont, de préférence, à mettre en œuvre par un premier dispositif ayant reçu un premier message d'un second dispositif, premier message pour lequel un accusé de réception non signé, et donc non envoyé, a été préparé :

1. si le premier dispositif ne dispose pas de suffisamment de clés pour envoyer un accusé de réception du premier message, le premier dispositif demande l'inversion de rôle ou le transfert de clés au second dispositif par un deuxième message (signé si le registre A42 ou S42 associé au second dispositif indique qu'une telle demande doit été signée), et si les clés sont reçues, le premier dispositif associe celles-ci aux communications avec le deuxième dispositif, puis rédige éventuellement un accusé de réception pour le deuxième message reçu transférant les clés. La procédure est arrêtée si aucune clé n'est reçue.

2. le premier dispositif prépare et envoie l'accusé de réception du premier message.

Le second dispositif avec lequel le premier dispositif, appareil ou serveur, communique peut, en particulier au cours de l'étape 1, si des clés sont demandées pour un ou des accusés de réception, vérifier la signature du deuxième message reçu, si le registre S42bis ou A42bis associé au second dispositif indique qu'une telle signature est nécessaire. Puis, si la vérification est positive, le second dispositif répond à la demande par l'envoi d'un troisième message d'accusé de réception signé comportant les clés demandées en quantité suffisante pour l'accusé de réception. Si une telle demande a déjà été faite et qu'un accusé de réception a déjà été envoyé sous la forme d'un troisième message, le second dispositif ré-envoie ledit troisième message. Si la demande n'est pas signée, mais que le registre S42bis ou A42bis permet d'accepter une telle demande, sans avoir rédigé de troisième message, le second dispositif rédige un quatrième message d'inversion de rôle de clés ou de transfert de clés incluant des clés permettant au premier dispositif de signer l'accusé de réception préparé pour le premier message, puis placer le quatrième message dans le registre S15bis, A15bis ou A40bis des messages à envoyer comportant les clés pour un accusé de réception, et enfin envoie ledit quatrième message.

Procédure pour le renvoi d'un message pour lequel aucun accusé de réception n'a été reçu

Les étapes suivantes sont, de préférence, à mettre en œuvre par un premier dispositif ayant envoyé un message à un second dispositif, message pour lequel aucun accusé de réception n'a été reçu :

1. si le message placé dans le registre S15bis ou A40bis envoyé précédemment par le premier dispositif comportant les clés nécessaires à son accusé de réception n'a pas encore reçu d'accusé de réception, le premier dispositif envoie de nouveau ledit message, puis attend le temps que prendrait l'accusé de réception d'être reçu quand le second dispositif peut communiquer normalement avec le premier dispositif; sinon passer à l'étape 3,

2. s'il n'y a pas de réponse au message de l'étape précédente, annuler la procédure car ce message comportant les clés nécessaires à son accusé de réception aurait dû donner lieu à un accusé de réception,

3. si un autre message, placé dans le registre S15 ou A40 des messages envoyés précédemment par le premier dispositif, n'a pas encore reçu d'accusé de réception, le premier dispositif envoie de nouveau ledit message et attend le temps usuel pris pour le renvoi d'un accusé de réception puis, dès réception de l'accusé de réception, le premier dispositif efface du registre des messages n'ayant pas reçu d'accusé de réception le message correspondant à l'accusé de réception reçu, puis la procédure est finie,

4. le message précédent placé dans le registre S15 ou A40 des messages envoyés, et envoyé à l'étape précédente par le premier dispositif, n'ayant pas encore reçu d'accusé de réception , si le premier dispositif dispose de suffisamment de clés, le premier dispositif envoie un message de transfert ou d'inversion de rôle de clés apportant un nombre de clés suffisantes au deuxième dispositif pour envoyer un accusé de réception au message situé dans le registre S15 ou A40, ainsi qu'audit message de transfert ou d'inversion de rôle de clés ; puis le premier dispositif attend le temps que prendrait l'accusé de réception d'être reçu quand le second dispositif peut communiquer normalement avec le premier. Les clés envoyées devraient en effet permettre l'envoi de l'accusé de réception.

5. à réception des accusés de réception attendus suite à l'envoi de messages à l'étape précédente, le premier dispositif retire les messages de la liste des messages envoyés en attente d'un accusé de réception,

6. si l'accusé de réception du message précédent n'a toujours pas été reçu, le premier dispositif annule la procédure,

Le deuxième dispositif avec lequel le premier dispositif, appareil ou serveur, communique peut en particulier :

a) après l'étape 1, recevoir le message, et si celui-ci a déjà donné lieu à la préparation d'un accusé de réception, renvoyer ledit accusé de réception, sinon, associer les clés éventuellement incluses dans le message reçu aux communications avec le premier dispositif, et préparer un accusé de réception et l'envoyer.

b) entre les étapes 3 et 4, recevoir le message, et si celui-ci a déjà donné lieu à la préparation d'un accusé de réception, renvoyer ledit accusé de réception, sinon, associer les clés incluses dans les message reçu aux communications avec le premier dispositif et préparer un accusé de réception pour ledit message, ainsi que pour l'autre message situé dans le registre contenant un message d'accusé de réception non signé puis envoyer les accusés de réception. Puis, si un message est reçu en provenance du même dispositif, y répondre en envoyant un accusé de réception.

Procédure d'envoi de message signé par un dispositif vers un autre dispositif

1. Avant de créer un nouveau message à envoyer à un deuxième dispositif, le premier dispositif s'assure de préférence que tous les accusés de réceptions des messages en provenance du deuxième dispositif ont été envoyés et que tout message envoyé vers le deuxième dispositif a bien donné lieu à la réception d'un accusé de réception. Le premier dispositif peut aussi bloquer la réception et l'envoi de tout message en provenance ou à destination du deuxième dispositif, autre que celui nécessaire à la procédure d'envoi du message, pendant la préparation dudit message et jusqu'à ce que la procédure d'envoi soit annulée ou accomplie. La procédure d'envoi du message comporte alors de préférence les étapes suivantes : Le premier dispositif calcule le nombre de clés nécessaires à l'envoi du message, calcule le nombre de clés nécessaires à l'envoi de l'accusé de réception, et consulte le registre S42 ou A42 indiquant que les messages de demande de clés à destination du deuxième dispositif doivent être signés, car le premier dispositif doit alors de préférence conserver suffisamment de clés disponibles au chiffrage à destination du deuxième dispositif pour pouvoir lui réclamer d'autres clés,

2. si le premier dispositif ne dispose pas de suffisamment de clés pour envoyer le message, il demande au deuxième dispositif le transfert ou l'inversion du rôle des clés manquantes, la demande étant faite par l'envoi d'un message signé si le registre S42 ou A42 associé au deuxième dispositif indique qu'une telle demande doit été signée, sinon passer à l'étape 5,

3. si le premier dispositif ne reçoit pas la quantité de clés manquantes, il annule l'envoi du message,

4. si le premier dispositif reçoit la quantité de clés manquantes, il ajuste le registre A3, A'3, A1, A'1, S1 ou S'1 prévu à cet effet, rédige un accusé de réception du message ayant transféré les clés, puis marque les clés utilisées pour la rédaction dudit message comme étant utilisées ; ces actions étant concomitantes. Puis il envoie ledit message d'accusé de réception; sinon annule la procédure d'envoi. Les ajustements des registres A3, A'3, A1, A'1, S1 ou S'1 consistent à modifier les registres A32, A12 ou S12 délimitant les clés associées au cryptage des clés associées au décryptage pour le système dans sa première version, ou bien à inverser les drapeaux A12' ou S12' indiquant le rôle des clés pour le système dans sa seconde version, si les clés sont reçues par inversion de rôle de clé, ou bien par la création de registres A3 ou A3' si les clés sont transférées, les clés reçues y étant inscrites comme clés servant au cryptage avec l'autre appareil. Dans les registres A32, A12 ou S12, les clés sont affectées au cryptage jusqu'à un certain endroit, puis elles sont affectées au décryptage, l'endroit pouvant être modifié, de façon à transformer des clés de cryptage en clés de décryptage, ou inversement.

5. le premier dispositif chiffre éventuellement les parties à chiffrer, crée et signe le message à envoyer, marque comme étant utilisées les clés utilisées pour cette création et cette signature et inscrit le message créé et signé dans le registre des messages envoyés n'ayant pas reçu d'accusé de réception. De préférence, les inscriptions des modifications des registres de cette étape sont concomitantes.

6. le premier dispositif envoie le message inscrit dans le registre à l'étape précédente,

7. éventuellement, le premier dispositif recueille l'accusé de réception et supprime le message du registre où il a été placé à l'étape 5.

Le deuxième dispositif avec lequel le premier dispositif, appareil ou serveur, communique peut en particulier :

a) après l'étape 2, vérifier la signature du message reçu si le registre S42bis ou A42bis associé au premier appareil indique qu'une telle signature est nécessaire, puis, si la vérification est positive, répondre par l'envoi d'un message signé d'inversion de rôle de clés ou de transfert de clés en quantité demandée (augmentée de la quantité nécessaire à l'envoi d'un accusé de réception audit message), si celles-ci sont disponibles, après avoir éventuellement inversé le rôle de certaines clés pour que celles-ci soient assignées au décryptage, le message étant aussi un accusé de réception si la demande reçue est signée.

b) après l'étape 4 : à la réception de l'accusé de réception, supprimer du registre des messages en attente d'accusé de réception le message correspondant à l'accusé de réception reçu.

c) après l'étape 6, à la réception du message, vérifier si celui-ci n'a pas déjà donné lieu à une réponse ou un accusé de réception en le comparant au message inscrit dans le registre associé au dernier accusé de réception envoyé. Si c'est le cas, renvoyer la réponse ou l'accusé de réception situé dans le registre prévu à cet effet.

d) Si l'étape c) a déterminé que le message était nouveau, vérifier la signature éventuelle du message et le rejeter si elle n'est pas valide,

e) intégrer les éventuelles clés reçues, copier le message dans le registre du dernier message reçu, le décrypter, et vider le registre d'accusé de réception.

f) inscrire le message reçu, ou bien son résumé, dans le registre qui est attaché au registre vidé d'accusé de réception et préparer l'accusé de réception; sinon, ignorer le message.

g) Puis, s'il y a suffisamment de clés pour signer l'accusé de réception, signer ledit accusé de réception dans son registre A41, A41bis, S15, A15, S15bis ou A15bis, puis l'envoyer au premier dispositif initiateur de la communication.

Procédé de communication chiffrée entre deux dispositifs pour l'envoi d'un message long

Les messages échangés entre dispositifs sont parfois longs, c'est-à-dire susceptibles de voir la communication échangeant ledit message interrompue. Il convient alors de couper le message long en plusieurs petits messages, l'interruption de la transmission d'un petit message ne nécessitant pas de transmettre de nouveau les petits messages qui ont déjà été transmis correctement. L'invention a donc encore pour objet, selon un autre de ses aspects, un procédé de communication chiffrée entre un premier dispositif et un deuxième pour l'envoi d'un message long M depuis le premier dispositif vers le deuxième dispositif, le procédé comportant :

a) de préférence, la fragmentation par le premier appareil du message M en plus petits messages ayant chacun un numéro de séquence, et si possible étant chacun de taille correspondant à une taille de clé à usage unique disponible pour communiquer avec l'autre appareil,

b) de préférence, la génération, pouvant être incrémentale mais de préférence aléatoire, par le premier appareil d'un identifiant du message M, l'identifiant du message M, le numéro de séquence de chaque petit message et le nombre total de petits messages étant concaténés à chaque petit message.

c) l'application pour chacun des petits messages de la « Procédure d'envoi de message signé par un appareil ou serveur vers un autre appareil ou serveur », la signature du petit message à l'étape 15 étant omise si le message doit seulement être crypté et non pas crypté et signé.

d) la reprise de l'envoi des petits messages non envoyés dès réception de l'accusé de réception du petit message précédent, si la procédure devait être interrompue, par exemple par manque de clés ou par déconnexion de la liaison entre les deux appareils.

L'identifiant du message M peut être une suite de caractères alphanumériques et/ou de signes pouvant être convertie en un mot numérique par le biais d'un code ASCII ou autre. L'identifiant du message M peut être un nombre généré d'une manière aléatoire ou pseudo-aléatoire.

L'identifiant du message M est préférentiellement généré par le premier appareil. En variante, la génération de l'identifiant du message M est effectuée par un autre appareil de confiance.

L'identifiant du message M, le numéro de séquence de chaque petit message et le nombre total de petits messages sont de préférence envoyé non crypté, chaque petit message étant alors de préférence signé et la signature portant aussi sur l'identifiant du message M, le numéro de séquence de chaque petit message et le nombre total de petits messages.

A la réception de tous les messages envoyés, le deuxième appareil reconstruit le message M.

### Exemples d'utilisation

L'invention peut être utilisée, par exemple, pour transférer, de manière sécurisée, par une connexion physique ou par une connexion sans fil, l'identifiant d'une clé électronique à une serrure électronique de porte ou de commande d'ouverture de porte, cette serrure pouvant s'ouvrir à la réception d'un identifiant approuvé.

L'invention peut également être utilisée pour transférer certaines informations stockées sur une carte équipée d'un petit écran et d'un outil de sélection de documents stockés sur la carte. Un document sélectionné par l'outil de sélection peut être transmis de manière sécurisée à une deuxième carte via une connexion NFC, lorsqu'on approche la première carte de la deuxième, après avoir éventuellement approuvé une telle utilisation par l'entrée d'un code ou d'un ou plusieurs moyens biométriques comme par exemple la vérification de l'empreinte digitale.

L'invention peut aussi être utilisée pour transférer en toute sécurité des messages textes d'un téléphone à un autre via le réseau téléphonique numérique. L'invention est mise en œuvre après avoir appuyé sur le bouton de transfert de message pour envoyer le message à un serveur intermédiaire ou directement à un autre téléphone, si ce dernier est connecté à un réseau de données au moment de l'envoi. L'invention peut également être utilisée pour enregistrer un téléphone sur un réseau, la communication sécurisée permettant au réseau et au téléphone d'échanger leurs identifiants.

Implémentée dans un système comprenant un capteur d'enregistrement de température ou de pression, ou dans un système comprenant un compteur d'électricité, de gaz, d'eau ou de chaleur, l'invention peut être utilisée pour lire en toute sécurité un tel compteur, celui-ci communiquant via un réseau sans fil tel que WiFi ou 3G avec un centre de données distant, ou communiquant via NFC ou Bluetooth, avec un appareil électronique pour recueillir des données de mesures. Des compteurs ou des capteurs spécialement conçus communiquant selon un procédé de l'invention peuvent être utilisés dans des appareils médicaux implantés dans des corps, par exemple pour surveiller des conditions médicales, des batteries ou des implants cardiaques.

Implémentée dans un système comprenant des véhicules, l'invention peut être utilisée pour établir des liaisons de données sécurisées entre des véhicules proches les uns des autres. Les clés à usage unique peuvent être utilisées pour chiffrer le hachage des données transmises, garantissant ainsi l'authenticité de ces données. Les données pourraient être transférées via Bluetooth, et un canal de communication sécurisé pourrait être établi pour tous les véhicules à portée de Bluetooth et partageant des clés à usage uniques.

L'invention peut aussi être utilisée lors de l'envoi de courriers électroniques, pour leur cryptage, ou bien pour leurs signatures, en particulier si les appareils émetteurs et récepteurs desdits courriers sont mobiles ou bien si ceux-ci possèdent un module ou un logiciel permettant d'effectuer le travail de cryptage et de vérification tel que décrit selon l'invention. De manière générale, l'invention peut être utilisée à chaque fois qu'une liaison de communication de données sécurisée est nécessaire entre des dispositifs, la sécurisation de la liaison consistant à garder les données transmises secrètes et/ou s'assurer qu'elles n'ont pas été modifiées pendant la transmission, la communication étant filaire, sans fil ou une combinaison des deux.

L'invention a aussi pour objet, selon un autre de ses aspects, un produit programme d'ordinateur comprenant des instructions lisibles par un processeur d'un appareil pour la mise en œuvre du procédé selon l'invention.

**Brève description des dessins**

L'invention pourra être mieux comprise à la lecture de la description détaillée qui va suivre, d'exemples non limitatifs de mise en œuvre de celle-ci, et à l'examen du dessin annexé, sur lequel :

[Fig 1] la figure 1 illustre schématiquement les différentes liaisons entre appareils et serveurs,
[Fig 2] la figure 2 est une table indiquant quelle procédure de l'invention fait appel à quelle autre procédure,
[Fig 3] la figure 3 illustre schématiquement le registre A1 ainsi que ses registres associés selon l'invention dans sa première version,
[Fig 4] La figure 4 représente un exemple d'utilisation de l'invention, les appareils du système étant soit de type carte de crédit, soit de type double-lecteur, en particulier de type double-lecteur international,
[Fig 5a] la figure 5a illustre schématiquement les premières étapes d'un exemple de procédure de transfert de message signé entre deux appareils,
[Fig 5b] la figure 5b représente les étapes suivant celles décrites à la figure 5a,
[Fig 5c] la figure 5c représente les étapes suivant celles décrites à la figure 5b,
[Fig 5d] la figure 5d illustre les étapes suivant celles décrites à la figure 5c,
[Fig. 6a] la figure 6a représente les premières étapes d'allocation et de synchronisation de clés à usage unique pour la communication entre appareils, et
[Fig 6b] la figure 6b illustre les étapes suivant celles décrites à la figure 6a.

**Description détaillée**

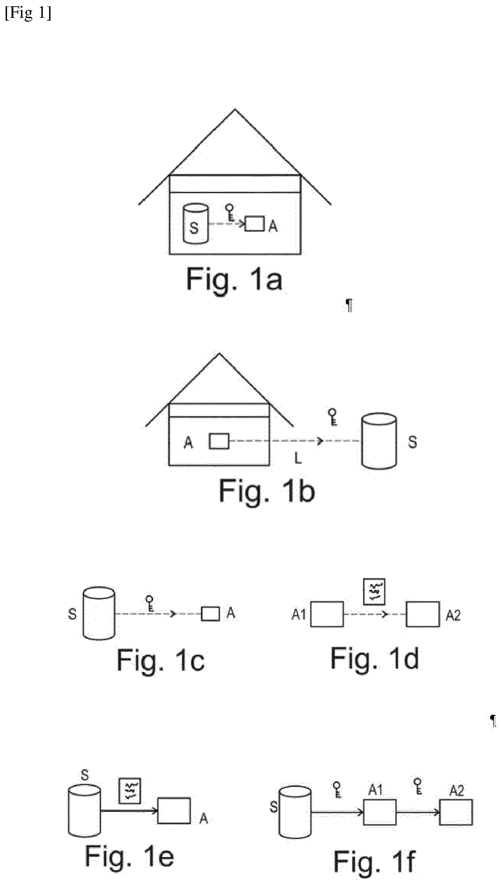

Figure 1 : les différentes liaisons entre appareils et serveurs

Les figures la à 1f illustrent les différentes liaisons entre appareils et serveurs. A est un appareil et S est le serveur. Par exemple, l'appareil A est un ordinateur personnel ou un téléphone intelligent ou une carte à puce.

L'appareil A et le serveur S peuvent être chacun équipés d'un processeur pour l'exécution des étapes d'un procédé selon l'invention, et d'une mémoire pour sauvegarder les données nécessaires à cette exécution et d'autres mémoires pour contenir les registres décrits dans l'invention, ces mémoires étant de préférence persistantes telles que des disques durs ou de la mémoire Flash.

A la figure la, des clés sont ajoutées à l'appareil par le serveur dans un local sécurisé proche du serveur.

A la figure 1b, des clés sont ajoutées à l'appareil par le serveur dans un local sécurisé éloigné du serveur. La liaison informatique L est sécurisée, étant par exemple une liaison quantique.

A la figure 1c, des clés présentes sur l'appareil A sont assignées par le serveur S pour sécuriser des communications avec d'autres appareils.

A la figure 1d, deux appareils A1 et A2 échangent des données sécurisées.

A la figure le, le serveur S échange des messages sécurisés avec un appareil A.

La figure 1f illustre la communication de clés à l'aide d'un premier appareil A1 vers un second appareil A2 pour que ce dernier puisse communiquer avec un troisième appareil.

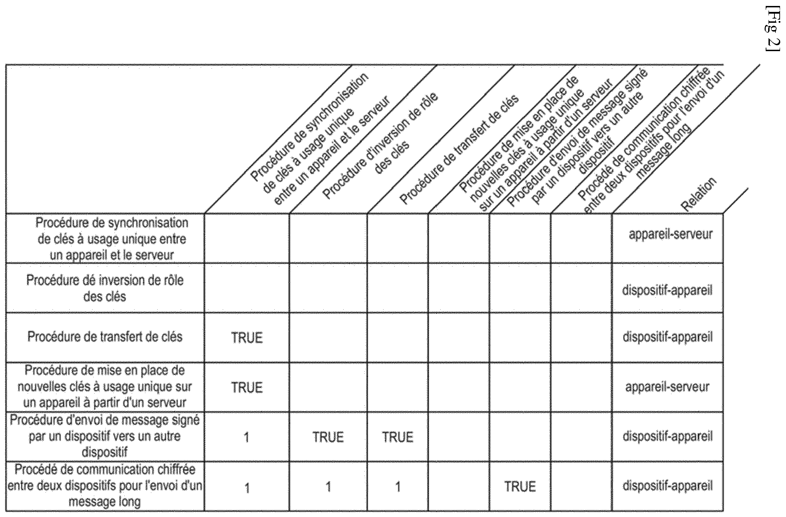

Figure 2 : tableau des procédures

La figure 2 est une table indiquant quelle procédure de l'invention fait appel à quelle autre procédure. Pour chaque procédure écrite sur une ligne de la table, on identifie les procédures écrites sur les colonnes auxquelles elle peut faire appel directement (par un 'TRUE') ou indirectement (par un 1). La dernière colonne indique entre quels types de dispositifs la procédure fait échanger des données.

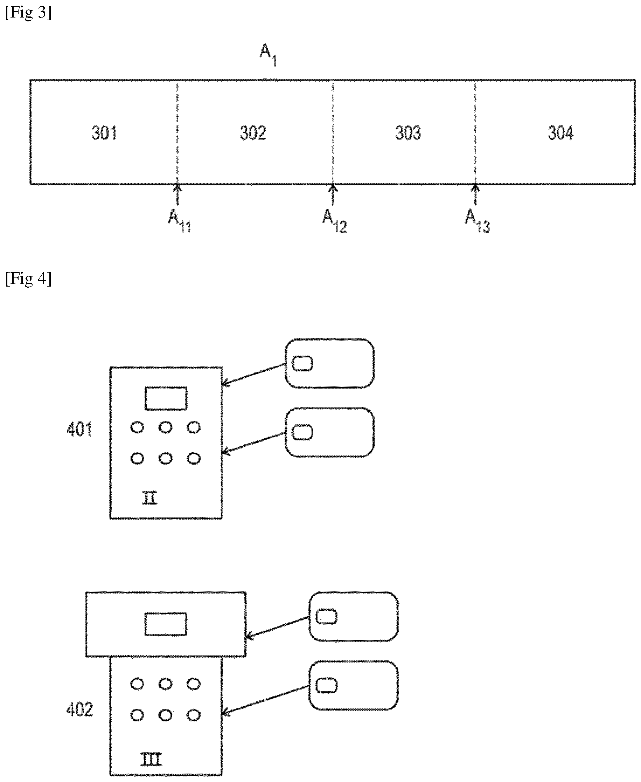

Figure 3 : Le registre A1

La figure 3 illustre schématiquement les registres A1 ainsi que ses registres associés, selon l'invention dans sa première version.

301 représente les nombres soit déjà utilisés pour le chiffrage soit étant utilisés par le registre A3.

302 représente les nombres utilisés comme clés pour le chiffrage n'ayant pas déjà été utilisées.

303 représente les nombres utilisés comme clés pour le déchiffrage n'ayant pas déjà été utilisées.

304 représente les nombres utilisés comme clés pour le déchiffrage ayant déjà été utilisées.

Figure 4 : doubles lecteurs nationaux et doubles lecteurs internationaux

La figure 4 représente un exemple d'utilisation de l'invention, les appareils du système étant soit de type carte de crédit, soit de type double-lecteur national, soit de type double lecteur international. Le lecteur national peut communiquer avec toutes les cartes appartenant à un même groupe national, tandis que le lecteur international peut communiquer avec toutes les cartes du système. Les lecteurs nationaux peuvent par exemple être distribués à tous les habitants d'un même pays, et les lecteurs internationaux peuvent être distribués à tous les commerçants de plusieurs pays.

401 : deux cartes du même pays communiquent par un double-lecteur national II.
402 : deux cartes, éventuellement de pays différents, communiquent ensemble via un double-lecteur international III.

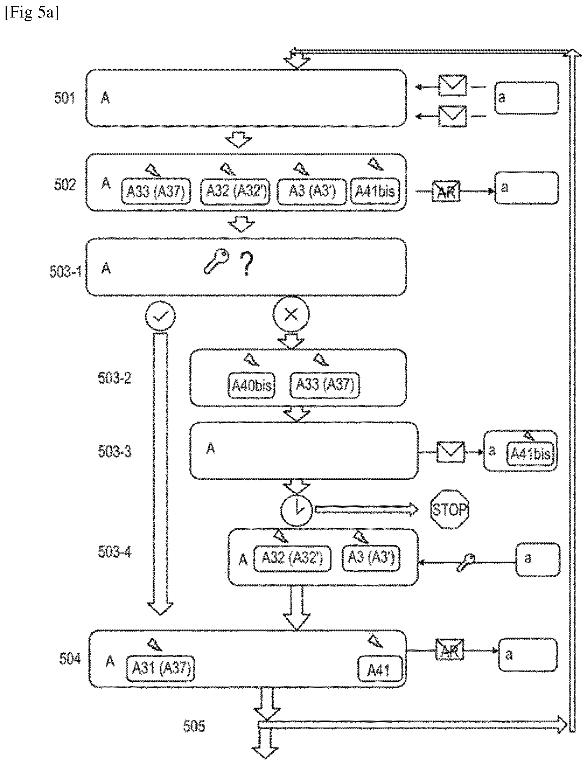

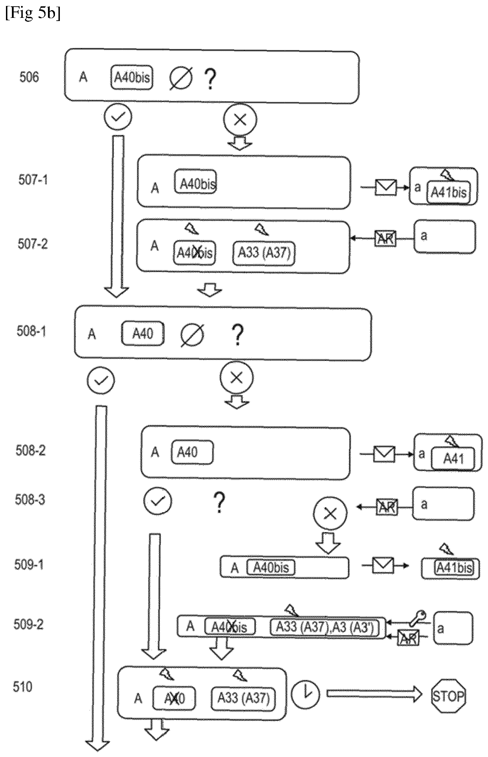

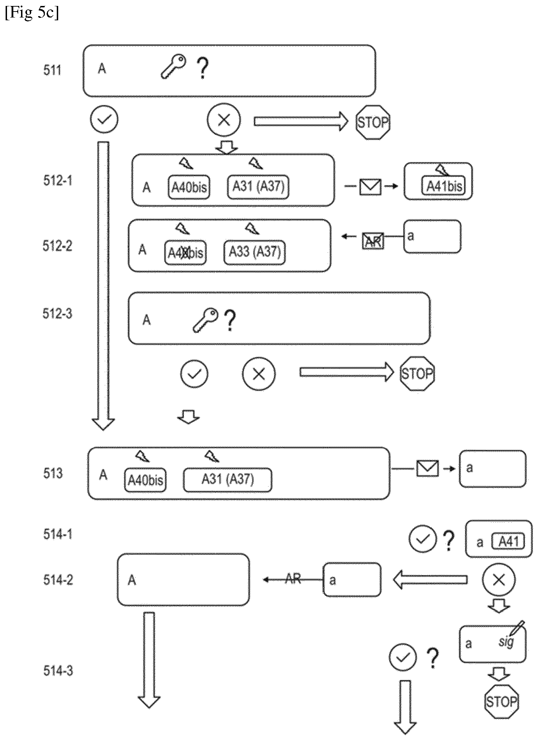

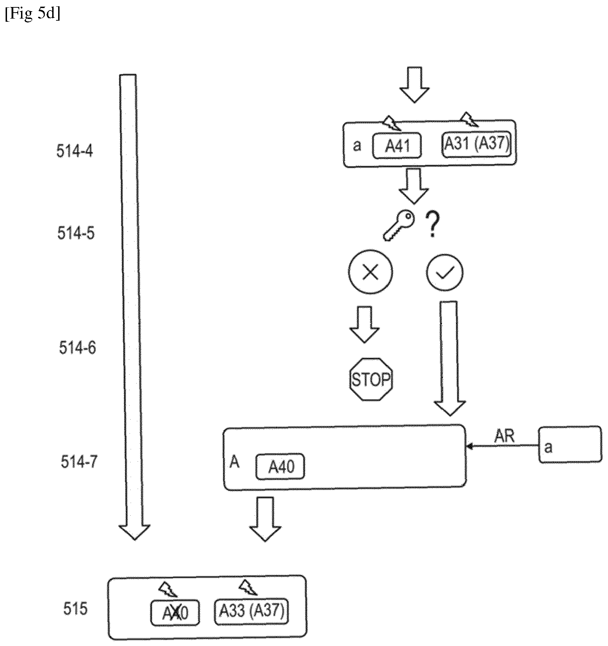

Figure 5 : transfert de message selon l'invention dans sa première version

La figure 5 est constituée des figures 5a à 5d, illustrant schématiquement un exemple de transfert de message signé entre deux appareils A. Les noms des registres modifiés sont indiqués entre parenthèses pour les registres de la seconde version quand ceux-ci sont différents des registres dans la première version.

- A l'étape 501, le premier appareil A reçoit un message éventuellement envoyé par le deuxième appareil *a* ainsi que, éventuellement un message transférant aussi les clés nécessaires à son accusé de réception.
- à l'étape 502, le premier appareil A inscrit comme utilisés les identifiants de clés éventuellement utilisées dans le message reçu en modifiant les registres A33 (A37) associés aux clés utilisées, puis inscrit éventuellement comme inversées les clés envoyées dans le message de transfert de clés en modifiant le registre A32 (A32') associés auxdites clés inversées ou en ajoutant un nouveau registre A3 (A3') pour la clé reçue, et rédige puis signe un accusé de réception sur le registre A41bis à l'éventuel message de transfert de clés avant de l'envoyer.
- à l'étape 503-1 A vérifie qu'il a suffisamment de clés pour envoyer un accusé de réception (il faut deux clés pour envoyer un accusé de réception signé mais l'appareil doit aussi garder 4 clés de plus pour pouvoir demander plus de clés à l'autre appareil si une telle demande doit être signée) et va à l'étape 504 ou, sinon, à l'étape 503-2, ré-envoie le message du registre A40bis si celui-ci n'est pas vide (puis reçoit l'accusé de réception et efface ledit registre A40bis) puis prépare sur le registre A40bis un message de demande de transfert de clé, signe ledit message (et marque les clés utilisées pour la signature comme utilisées en modifiant leur registre A31 (A37)) si le registre A42 associé à l'autre dispositif indique qu'une demande de clé doit être signée, et enfin envoie le message à l'étape 503-3, puis reçoit et intègre les clés à l'étape 503-4 en modifiant les registres A3 ou A32, et continue vers l'étape 504 ou bien ne reçoit pas les clés et arrête la procédure.
- A l'étape 504, un accusé de réception est préparé pour le premier message reçu à l'étape 501, la préparation de cet accusé de réception faisant modifier des registres A31 (A37) et l'accusé de réception étant inscrit dans le registre A41. Le premier appareil A valide les modifications de ses registres puis envoie les messages d'accusé de réception.
- A l'étape 505, on recommence les étapes 501 à 504 jusqu'à ce qu'il n'y ait plus de message reçu de l'autre appareil.
- A vérifie à l'étape 506 que le dernier message envoyé de son registre A40bis comportant les clés nécessaires à l'envoi d'un accusé de réception a été reçu en vérifiant que le registre A40bis n'est pas vide. Si ledit registre A40bis est vide, la procédure continue à l'étape 508
- Le premier appareil A envoie à l'étape 507-1 au second appareil *a* le dernier message disposé sur son registre A40bis comportant les clés nécessaires à l'envoi d'un accusé de réception ; le second appareil *a* reçoit le message et répond en préparant et envoyant un accusé de réception à l'étape 507-2 tout en marquant comme utilisées les clés utilisées pour ledit accusé de réception. Puis le premier appareil A reçoit l'accusé de réception et efface son registre de messages envoyés A40bis tout en marquant utilisée la clé utilisée dans l'accusé de réception ; ou bien arrête la procédure s'il ne reçoit pas l'accusé de réception.

- A l'étape 508-1, le premier appareil A vérifie si son registre A40 est vide et, si c'est le cas, il passe à l'étape 512 ; dans le cas contraire, il envoie le dernier message disposé dans son registre A40 d'envoi de message à l'étape 508-2
- A l'étape 508-3, le second appareil répond en envoyant un accusé de réception et le premier appareil passe à l'étape 510 ou bien ne répond pas et le premier appareil passe à l'étape 509.
- A l'étape 509-1, si son registre A40 n'est pas vide, le premier appareil A prépare et place sur son registre A40bis un message à envoyer comportant suffisamment de clés pour son propre accusé de réception, et pour un accusé de réception au message du registre A40 ; puis valide les modifications de registre et envoie ledit message ; sinon il passe à l'étape 511.
- A l'étape 509-2, le premier appareil A reçoit les accusés de réception, efface de ses registres A40 et A40bis les messages envoyés n'ayant pas encore reçu d'accusé de réception et marque dans le registre A33 (A37) que la clé utilisée pour la signature a été utilisée, puis passe à l'étape 510, ou bien arrête la procédure s'il ne reçoit pas lesdits accusés de réception.
- A l'étape 510, le premier appareil A efface des registres A40 les messages envoyés n'ayant pas encore reçu d'accusé de réception et marque le registre A33 (A37) contenant les clés utilisées pour la signature du message reçu.
- A l'étape 511, l'appareil A calcule le nombre de clés nécessaires à l'envoi du message, calcule le nombre de clés nécessaires à l'envoi de l'accusé de réception, et consulte le registre A42 indiquant que les messages de demandes de clés à destination de l'autre appareil doivent être signés, car l'appareil doit alors conserver suffisamment de clés disponibles au chiffrage à destination de l'appareil.
- A l'étape 512-1, si le premier dispositif A ne dispose pas de suffisamment de clés pour envoyer le message, il demande au second dispositif 'a' le transfert ou une inversion du rôle des clés manquantes, la demande étant faite par l'envoi d'un message signé si le registre S42 ou A42 associé à l'autre appareil indique qu'une telle demande doit été signée. Sinon, il passe à l'étape 516.
- A l'étape 512-2, l'appareil A reçoit les clés manquantes et inscrit les clés reçues dans ses registres A3 et envoie un accusé de réception.
- A l'étape 512-3, l'appareil A arrête la procédure s'il n'a pas reçu suffisamment de clés.
- A l'étape 513, l'appareil A crée et signe le message à envoyer, marque utilisées les clés utilisées pour cette création et cette signature et inscrit le message créé et signé dans le registre A40 des messages envoyés n'ayant pas reçu d'accusé de réception. Les inscriptions et modifications des registres de cette étape étant concomitantes ; puis A envoie le message inscrit dans le registre A40.
- Dès la réception du message, le second appareil 'a' vérifie à l'étape 514-1 si le message reçu n'a pas déjà donné lieu à une réponse ou un accusé de réception en le comparant au message inscrit dans le registre associé au dernier accusé de réception envoyé. Si c'est le cas, il renvoie la réponse ou l'accusé de réception situé dans le registre A41 prévu à cet effet à l'étape 514-2 et le processus continue à l'étape 515.
- Si à l'étape 514-1, le second appareil 'a' a déterminé que le message était nouveau, il vérifie la signature éventuelle du message à l'étape 514-3 et rejette le message si la signature n'est pas valide, sinon le second appareil 'a' intègre les éventuelles clés reçues dans son registre A3, prépare un accusé de réception s'il a suffisamment de clés pour cela, sinon il prépare un accusé de réception sans clé et copie ledit accusé de réception dans le registre A41 prévu à cet effet à l'étape 514-4, puis il détermine à l'étape 514-5 s'il vient de signer ou non l'accusé de réception et stoppe la procédure à l'étape 514-6 s'il ne l'a pas signé, sinon envoie l'accusé de réception à l'étape 514-7.
- A l'étape 515, A recueille l'accusé de réception et supprimer le message du registre A40 où il a été placé à l'étape 518.

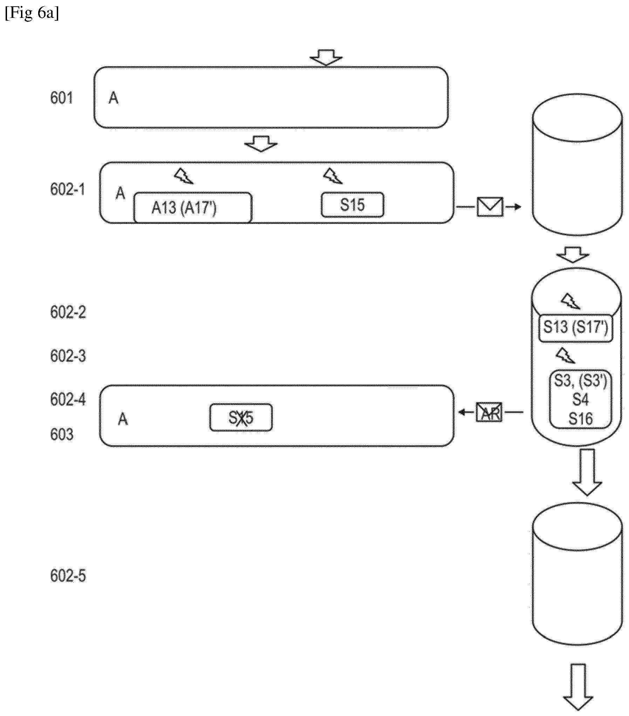

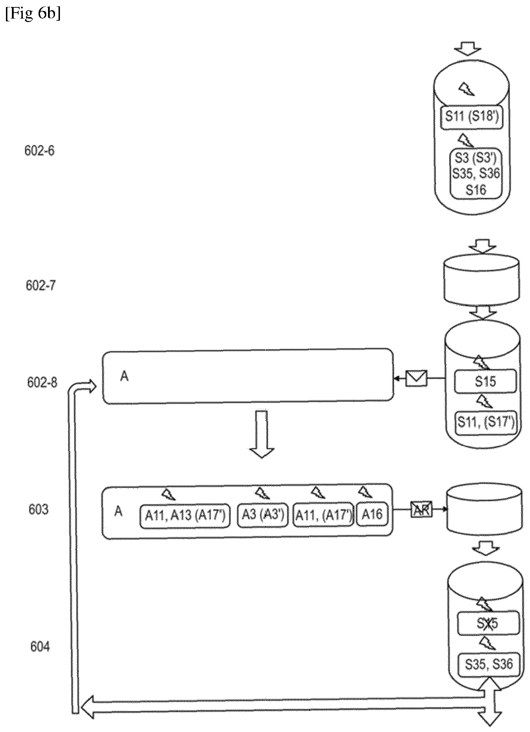

Figure 6 : allocation et synchronisation de clés à usage unique pour la communication entre appareils

La figure 6 est constituée des figures 6a et 6b, représentant un exemple d'allocation par le serveur de clés destinées à la sécurisation de communication entre appareils, suivi de la communication de ces clés auxdits appareils.

- l'appareil A vérifie avoir reçu les accusés de réception aux messages envoyés par le passé au serveur puis établit à l'étape 601, à partir de son ensemble A3 de clés dédiées à la sécurisation entre appareils, un ensemble d'identifiants de clés à usage unique dont le 'drapeau serveur' A35 est activé,
- Puis, l'appareil A inscrit dans son registre S15 des messages à envoyer au serveur, à l'étape 602-1, un message signé contenant des identifiants de l'ensemble établi à l'étape précédente ainsi que les informations A31, A32, A33, A34 (A37, A32') relatives aux registres A3 dont le drapeau serveur est activé, la signature du message nécessitant la modification du registre A13 (A17') des clés utilisées et envoie le message au serveur.
- Suite à la réception par le serveur des identifiants de clés de l'ensemble établi à l'étape 602-1, la vérification à l'étape 602-2 de la signature du message et le marquage des clés utilisées pour ladite signature, comme utilisée, en modifiant le registre S13 (S17') puis la mise à jour à l'étape 602-3 par le serveur de son ensemble S3 (S3') et de ses registres afférents ainsi que de S4, et la rédaction d'un accusé de réception au message dans le registre S16 suivi de son envoi à l'étape 602-4,

- Le message d'accusé de réception est reçu par l'appareil à l'étape 603 qui efface le message inscrit dans son registre S15.

- Le serveur, de préférence à l'aide entre autres de l'ensemble S4, et de son ensemble S3 (S3') ainsi que des ensembles S3 (S3') et de leurs registres afférents des autres appareils et en tenant compte du nombre de clés de S1 (S1') nécessaires sur le serveur pour signer le message en préparation et en tenant compte du fait que toute clé transmise d'un registre S1 (S1') d'un autre appareil nécessitera pour être chiffrée une clé de même taille, le serveur calcule à l'étape 602-5 pour chaque autre appareil un nombre optimal de clés à usage unique à utiliser par l'appareil pour communiquer avec chacun des autres appareils ; ce nombre pouvant correspondre par exemple à un certain multiple du nombre de clés utilisées dans la dernière semaine augmenté du nombre de clés utilisées dans le dernier mois si ce nombre est plus grand et encore augmenté d'une constante,
- le serveur utilise ce nombre optimal et calcule, à partir des registres S31, S32, S33 et S34 (S37), pour chaque autre appareil, le nombre de clés à usage unique non utilisées, afin de déterminer la quantité de clés supplémentaires à associer à l'appareil pour la communication avec chaque autre appareil du système,
- A l'étape 602-6, le serveur associe à l'appareil des clés à usage unique présentes sur les ensembles S1 (S1') des autres appareils identifiés à l'étape précédente et avec lesquels ledit appareil doit obtenir de nouvelles clés de communication, cette association de clés par le serveur consistant de préférence à :

  - ajuster les registres S11 (S18') des autres appareils pour tenir compte des clés nouvellement attribuées, c'est-à-dire, pour l'invention dans sa première version, inscrire dans le registre S11 de chaque autre appareil dont une ou plusieurs clé du registre S1 est utilisée pour sécuriser les communications avec le premier appareil, l'adresse de la prochaine clé du registre S1 non encore utilisée et non déjà associée à aucun autre appareil, ou bien, pour le système dans sa seconde version marquer 'VRAI' sur le registre S18' indiquant si la clé de S1' est utilisée par un registre S 3' pour les clés des registres S1' des autres appareils attribuées à la communication avec le premier appareil,
  - ajouter au registre S3 (S3') de l'appareil les clés et leurs positions dans les registres S1 (S1') des autres appareils et en marquant ces nouvelles clés comme non copiées sur l'appareil ou l'autre appareil (registres S35 et S36), et
  - ajouter au registre S3 (S3') des autres appareils les identifiants desdites clés tout en ajustant les registres S11 (S18') des clés utilisées.

- Le serveur S établit à l'étape 602-7 la liste des clés non présentes dans son ensemble A3 (A3') mais présentes dans le registre A1 ou A3 (A1' ou A3') de l'autre appareil, cette liste pouvant être non nulle, en particulier à la suite des associations de clés à l'appareil de l'étape 602-6 de cette procédure et le serveur S associe les clés à leurs identifiants ainsi que l'identifiant de l'appareil auquel chacune de ces clés est associée, Il ajoute à cette liste les clés présentes placées sur le registre S3 (S3') associé à l'appareil et non encore copiées sur l'appareil qui ont été placées sur ce registre S3 (S3') par cette même procédure utilisée par quelques-uns des autres appareils du système.
- A une étape 602-8, il rédige sur son registre S15 un message regroupant des clés associées à un certain nombre d'autres appareils 20 par exemple, de la liste définie à l'étape précédente et non encore envoyées vers l'appareil, puis signe et envoie ce message à l'appareil.
  à la réception par l'appareil de nouvelles clés en provenance du serveur :

- l'appareil vérifie à l'étape 603 la signature du message reçu et en déchiffre les clés tout en marquant utilisées les clés utilisées pour la signature et le chiffrement (registre A13 (A17')). Il inscrit les clés reçues dans le registre A3 (A3') de l'appareil, le registre A36 prenant la valeur du registre S36, et modifie les registres A11 (A17') des clés utilisées provenant de l'appareil, puis rédige à l'étape 606 pour le serveur un accusé de réception qu'il inscrit dans son registre A16, marque utilisées les clés utilisées pour la signature dudit message; puis, enfin envoie l'accusé de réception.

- A la réception de l'accusé de réception, après vérification de sa signature, le serveur efface son registre S15 et met à jour à l'étape 605 ses registres S35 ou S36 de copie sur l'appareil ou de copie sur l'autre appareil. Puis recommence à l'étage 602-8 tant que toutes les clés de la liste définie à l'étape 602-7 n'ont pas encore toutes été envoyées.

L'invention n'est pas limitée aux exemples de réalisation décrits ci-dessus, ni aux applications exemplifiées. L'invention peut être utilisée notamment pour sécuriser les transactions financières, ou dans toute procédure permettant d'apporter des clés à usage unique à des appareils utilisant des dispositifs de communication.

**Table des matières**

| | |
|---|---|
| Les clés dans la première version de l'invention | 5 |
| Les clés dans la seconde version de l'invention | 5 |
| Registres | 5 |
| Registres propres à la première version | 6 |
| Registres propres à la seconde version | 8 |
| Registres communs aux deux versions | 10 |
| Tableau récapitulatif des registres | 14 |
| Moyens de transmissions entre dispositifs | 14 |
| Groupes d'appareils | 15 |
| Appareils médiateurs | 15 |
| Groupements par régions ou groupes d'utilisateurs | 16 |
| Groupements par groupes d'utilisateurs avec utilisation de médiateurs | 16 |
| Dispositifs | 17 |
| Chiffrage | 17 |
| Signatures | 18 |
| Accusé de réception | 20 |
| Intérêt d'avoir des accusés de réception pour les messages ordinaires | 20 |
| Conservation des messages envoyés jusqu'à réception de l'accusé de réception | 21 |
| Conservation du dernier accusé de réception envoyé | 21 |
| Effacement du dernier accusé de réception envoyé | 21 |
| Contenu du message d'accusé de réception | 21 |
| Concomitance entre l'écriture du message reçu et l'inscription de son accusé de réception | 22 |
| Vérification de modification de registre d'un autre dispositif | 22 |
| Cas d'erreur détectée dans le chiffrage | 22 |
| Les clés | 23 |
| Rôle attribué aux clés | 23 |
| Emplacement des clés | 23 |
| Message de transfert de clés | 24 |
| Demande de clés | 24 |
| Marquage de l'utilisation des clés | 25 |
| Procédures non parallèles | 25 |
| Concomitance | 25 |
| Procédures | 26 |
| Procédure d'allocation et de synchronisation de clés à usage unique pour la communication entre appareils | 26 |
| Procédure d'inversion du rôle des clés | 30 |
| Procédure de transfert de clés | 31 |
| Procédure de mise en place de nouvelles clés à usage unique sur un appareil à partir d'un serveur | 33 |
| Procédure d'envoi d'un accusé de réception d'un message reçu pour lequel aucun accusé de réception n'a été envoyé | 36 |
| Procédure pour le renvoi d'un message pour lequel aucun accusé de réception n'a été reçu | 37 |
| Procédure d'envoi de message signé par un dispositif vers un autre dispositif | 38 |
| Procédé de communication chiffrée entre deux dispositifs pour l'envoi d'un message long | 41 |
| Exemples d'utilisation | 42 |
| Brève description des dessins | 43 |
| Description détaillée | 44 |
| Figure 1 : les différentes liaisons entre appareils et serveurs | 44 |
| Figure 2 : tableau des procédures | 45 |
| Figure 3 : Le registre A1 | 45 |
| Figure 4 : doubles lecteurs nationaux et doubles lecteurs internationaux | 45 |

(suite)

Figure 5 : transfert de message selon l'invention dans sa première version     46

Figure 6 : allocation et synchronisation de clés à usage unique pour la communication entre appareils     49

**Revendications**

1. Procédé pour sécuriser la communication au sein d'un système comportant au moins un serveur et au moins deux appareils pouvant communiquer avec le serveur et entre eux, la communication entre les deux appareils s'effectuant de façon sécurisée par une clé de cryptage à usage unique commune aux deux appareils, procédé dans lequel après usage de ladite clé, une clé de cryptage à usage unique inutilisée mais déjà présente sur l'un des deux appareils est communiquée par le serveur à l'autre appareil, après que ce dernier s'est connecté audit serveur, en vue d'une communication sécurisée ultérieure entre les deux appareils, la connexion entre le serveur et les appareils s'effectuant dans un environnement non sécurisé.

2. Procédé selon la revendication 1 pour l'échange de messages, le procédé étant agencé pour que ledit au moins un serveur et lesdits au moins deux appareils gardent en mémoire leur dernier message envoyé d'un même type jusqu'à ce qu'il y ait réception d'un accusé de réception pour ledit message.

3. Procédé selon la revendication 1, dans lequel ledit au moins un serveur et lesdits au moins deux appareils gardent dans un registre les accusés de réception envoyés à la suite de la réception du dernier message d'un même type, de telle sorte qu'ils puissent renvoyer ledit accusé de réception s'ils devaient recevoir de nouveau le même message ledit au moins un serveur et lesdits au moins deux appareils de préférence gardant aussi dans un registre les messages correspondant aux accusés de réception conservés, ou alternativement un autre moyen de reconnaître lesdits messages, tel que leur haché, de façon à pouvoir vérifier si le message reçu a déjà donné lieu à la préparation d'un accusé de réception.

4. Procédé selon la revendication 1, dans lequel les registres modifiés de par la création et la signature d'un message, y compris le registre contenant un dernier message envoyé, et n'ayant pas reçu d'accusé sont modifiés en même temps.

5. Procédé selon la revendication 1, dans lequel les registres devant être modifiés lors de la réception d'un message, y compris le registre contenant un dernier message envoyé d'accusé de réception, sont modifiés en même temps.

6. Système pour la mise en œuvre du procédé selon l'une quelconque des revendications 1 à 5, avec un ensemble de registres présents sur ledit serveur (S) ledit ensemble de registres comportant :

   • un registre S1 pour chaque appareil mais situé sur le serveur, contenant une liste ordonnée de nombres aléatoires associée à l'appareil, ces nombres pouvant servir de clés à usage unique communes pour sécuriser la communication entre l'appareil et le serveur et des clés à usage unique servant à sécuriser des communications entre l'appareil et un autre appareil;
   • au moins un registre S3 pour chaque appareil mais situé sur le serveur, contenant, pour l'appareil, une référence de clés affectées à sécuriser la communication entre l'appareil et un autre appareil ; ces références étant de préférence accompagnées des copies dans un registre S39 des extraits des registres S1 qu'elles désignent, les références indiquant préférentiellement duquel registre S1 du premier ou second appareil la clé est extraite ainsi que son emplacement dans ledit registre S1 et la quantité de bits dont elle est constituée, ainsi que, s'il y a plus d'un serveur dans le système, la référence du serveur portant ledit registre S1,
   la signature d'un message qui ne peut être deviné étant préférentiellement formée d'un haché crypté par une clé à usage unique concaténée à l'identifiant de ladite clé,
   la signature d'un message qui peut être deviné étant préférentiellement formée du crypté du haché du message combiné à une clé à usage unique, concaténé à l'identifiant de ladite clé à usage unique et à l'identifiant de la clé à usage unique utilisées pour chiffrer le haché.

7. Système selon la revendication précédente, ledit ensemble de registres comportant :

   • un registre S11 pour chaque appareil, mais situé sur le serveur, comportant la référence de la première clé du registre S1 qui n'a pas encore ni été utilisée ni n'a été affectée à la communication entre appareils,

• un registre S12 pour chaque appareil, mais situé sur le serveur, comportant la référence de la première clé du registre S1 affectée au décryptage des données provenant de l'appareil,

• un registre S13 pour chaque appareil, mais situé sur le serveur, comportant de préférence la dernière clé du registre S1 affectée au décryptage des données provenant de l'appareil qui n'a pas déjà été utilisée,

• au moins un registre S31 pour chaque appareil, mais situé sur le serveur, associé à chaque registre S3 comportant la référence de la première clé du registre S3 qui n'a pas encore été utilisée par l'appareil,

• au moins un registre S32 pour chaque appareil, mais situé sur le serveur, associé à chaque registre S3 comportant la référence de la première clé du registre S3 affectée au décryptage des données reçues de l'autre appareil si les premières clés du registre S3 étaient affectées au cryptage, ou bien affectée au cryptage si les premières clés du registre S3 étaient affectées au décryptage,

• au moins un registre S33 pour chaque appareil, mais situé sur le serveur, associé à chaque registre S3 comportant la référence de la dernière clé du registre S3 située après la clé indiquée par le registre S32 et qui n'a pas encore été utilisée,

• un registre A1, situé sur chaque appareil, contenant une liste ordonnée de nombres aléatoires pouvant servir de clés à usage unique communes pour sécuriser la communication entre l'appareil et le serveur et des clés à usage unique servant à sécuriser des communications entre l'appareil et un autre appareil ; les clés situées en début de liste étant de préférence utilisées au décryptage des données en provenance du serveur ou bien affectées au cryptage et décryptage de données échangées par l'appareil avec un autre appareil tandis que les clés situées en fin de liste sont de préférence utilisées au cryptage de données envoyées vers le serveur,

• au moins un registre A3, situé sur chaque appareil, contenant une ou plusieurs listes de références de clés affectées à sécuriser la communication entre l'appareil et un autre appareil, ces clés étant extraites du registre A1 de l'appareil ou du registre A1 de l'autre appareil, ces références étant de préférence accompagnées des copies sur le registre A39 des extraits des registres A1 qu'elles désignent,

• un registre A11, présent sur chaque appareil, comportant la référence de la première clé du registre A1 qui n'a pas encore ni été utilisée ni affectée à la communication entre appareils,

• un registre A12, présent sur chaque appareil, comportant la référence de la première clé du registre A1, en partant du début dudit registre, affectée au cryptage des données envoyées au serveur, qui n'a pas déjà été utilisée,

• un registre A13, présent sur chaque appareil, comportant la référence de la dernière clé du registre A1, en partant du début dudit registre, affectée au cryptage des données envoyées au serveur, qui n'a pas déjà été utilisée,

• au moins un registre A31, présent sur chaque appareil, associé à chaque registre A3 comportant la référence de la première clé du registre A3, en partant du début dudit registre, qui n'a pas encore été utilisée,

• au moins un registre A32, présent sur chaque appareil, associé à chaque registre A3 comportant de préférence la première clé du registre A3, en partant du début dudit registre, affectée au décryptage des données envoyées à l'autre appareil, et

au moins un registre A33, présent sur chaque appareil, associé à chaque registre A3 comportant la dernière clé du registre A3, en partant du début dudit registre, affectée au décryptage des données provenant de l'autre appareil et qui n'a pas déjà été utilisée, les clés de décryptage étant extraites à partir de la fin de la liste.

8. Système pour la mise en œuvre du procédé selon l'une quelconque des revendications 1 à 5, avec un ensemble de registres présent sur ledit serveur (S) comportant :

• un ensemble S1' pour chaque appareil mais présent sur le serveur, de clés à usage unique utilisées soit pour la communication entre le serveur et lesdits au moins deux appareils, soit pour la communication entre lesdits au moins deux appareils, chaque clé possédant un identifiant S11' et un nombre ayant été généré aléatoirement S10',

• au moins un ensemble S3' pour chaque appareil mais présent sur le serveur, d'identifiants de clés à usage unique utilisées pour la communication entre deux appareils, une copie de ladite clé pouvant se trouver sur un registre S39', et si le système comporte plusieurs serveurs, l'identifiant du serveur porteur du registre S1' dont la clé est extraite.

9. Système selon la revendication précédente, ledit ensemble de registres comportant :

• un ensemble A1' présent sur chaque appareil, de clés à usage unique utilisées pour la communication entre le serveur et l'appareil en question ou pour la communication de cet appareil avec au moins un autre appareil, chaque clé possédant un identifiant A11' et un nombre ayant été généré aléatoirement A10', et

• au moins un ensemble A3', présent sur chaque appareil, d'identifiants de clés à usage unique utilisées pour la communication entre l'appareil en question et un autre appareil, accompagné éventuellement de ladite clé.

10. Système selon la revendication 6, la signature d'un message qui peut être deviné étant formée du crypté d'un nombre ayant été généré aléatoirement par l'émetteur du message et du crypté du haché d'un combiné du message à signer avec le nombre généré aléatoirement par l'émetteur concaténés aux identifiants des deux clés ayant servi aux cryptages, la vérification de la signature se faisant préférentiellement en décryptant le nombre aléatoire, le recombinant alors au message signé puis en vérifiant que le haché de ce combiné est bien le décrypté du haché reçu, la signature nécessitant de préférence l'utilisation de deux clés à usage unique : l'une pour chiffrer le nombre aléatoire, l'autre pour chiffrer le haché.

11. Système selon la revendication 6, le chiffrage des messages devinables étant fait par l'utilisation d'une fonction de cryptage appliquée successivement, de préférence deux fois, au message entier avec des clés à usage unique de taille au moins égale à celles du message et extraites du même ensemble de clés que les clés affectées aux signatures entre appareils, ces clés étant de préférence utilisées qu'une seule fois par le système pour effectuer un tel cryptage.

12. Système selon la revendication 6, disposant d'un ensemble de clés disposées les unes à la suite des autres dans un registre, formant une liste, chacune des clés étant référencée par sa place dans la liste, des clés pouvant notamment être ajoutées au sein de la liste, les clés ayant été utilisées en début ou fin de liste étant préférentiellement effacées de la liste.

13. Système selon la revendication 7, comportant :

- deux registres S42 et S42bis pour chaque appareil, mais situés sur le serveur, associés à chaque autre appareil, servant de drapeau pour indiquer si une demande de clés ou d'inversion de rôle de clés respectivement à destination ou en provenance de l'autre appareil doit être signée ou non, et
- deux registres A42 et A42bis associés à chaque autre appareil ou au serveur servant de drapeau pour indiquer si une demande de clés ou d'inversion de rôle de clés respectivement à destination ou en provenance de l'autre appareil doit être signée ou non.

14. Procédé d'envoi de message signé par un premier dispositif vers un deuxième dispositif, le premier et le deuxième dispositif appartenant à un système selon la revendication 13 comportant les étapes suivantes :

a. le premier dispositif calcule le nombre de clés nécessaires à l'envoi du message, calcule le nombre de clés nécessaires à l'envoi de l'accusé de réception, et consulte le registre S42 ou A42 indiquant que les messages de demande de clés à destination du deuxième dispositif doivent être signés, car le premier dispositif doit alors conserver suffisamment de clés disponibles au chiffrage à destination du deuxième dispositif,
b. si le premier dispositif ne dispose pas de suffisamment de clés pour envoyer le message, il demande au deuxième dispositif le transfert ou l'inversion du rôle des clés manquantes, la demande étant faite par l'envoi d'un message signé si le registre S42 ou A42 associé au deuxième dispositif indique qu'une telle demande doit été signée, sinon passer à l'étape e,
c. si le premier dispositif ne reçoit pas la quantité de clés manquantes, il annule l'envoi du message,
d. si le premier dispositif reçoit la quantité de clés manquantes, ajuste le registre S3 ou A3 prévu à cet effet, rédige un accusé de réception du message ayant transféré les clés, puis marque les clés utilisées pour la rédaction dudit message comme étant utilisées, ces actions étant concomitantes, puis envoie ledit message d'accusé de réception; sinon annule la procédure d'envoi,
e. le premier dispositif chiffre éventuellement les parties à chiffrer, crée et signe le message à envoyer, marque comme étant utilisées les clés utilisées pour cette création et cette signature et inscrit le message créé et signé dans le registre des messages envoyés n'ayant pas reçu d'accusé de réception, et
f. le premier dispositif envoie le message inscrit dans le registre à l'étape précédente.

15. Produit programme d'ordinateur comprenant des instructions lisibles par un processeur d'un appareil pour la mise en œuvre du procédé selon l'une quelconque des revendications 1 à 5 et 14.

[Fig 1]

Fig. 1a

Fig. 1b

Fig. 1c

Fig. 1d

Fig. 1e

Fig. 1f

[Fig 2]

| | Procédure de synchronisation de clés à usage unique entre un appareil et le serveur | Procédure d'inversion de rôle des clés | Procédure de transfert de clés | Procédure de mise en place de nouvelles clés à usage unique sur un appareil à partir d'un serveur | Procédure d'envoi de message signé par un dispositif vers un autre dispositif | Procédé de communication chiffrée entre deux dispositifs pour l'envoi d'un message long | Relation |
|---|---|---|---|---|---|---|---|
| Procédure de synchronisation de clés à usage unique entre un appareil et le serveur | | | | | | | appareil-serveur |
| Procédure dé inversion de rôle des clés | | | | | | | dispositif-appareil |
| Procédure de transfert de clés | TRUE | | | | | | dispositif-appareil |
| Procédure de mise en place de nouvelles clés à usage unique sur un appareil à partir d'un serveur | TRUE | | | | | | appareil-serveur |
| Procédure d'envoi de message signé par un dispositif vers un autre dispositif | 1 | TRUE | TRUE | | | | dispositif-appareil |
| Procédé de communication chiffrée entre deux dispositifs pour l'envoi d'un message long | 1 | 1 | 1 | | TRUE | | dispositif-appareil |

[Fig 3]

$A_1$

| 301 | 302 | 303 | 304 |

$A_{11}$          $A_{12}$          $A_{13}$

[Fig 4]

401

II

402

III

[Fig 5a]

[Fig 5b]

[Fig 5c]

[Fig 5d]

514-4

514-5

514-6

514-7

515

a | A41 | A31 (A37)

?

STOP

AR ← a

A | A40

A33 (A37)

A40

[Fig 6a]

EP 3 832 948 A1

[Fig 6b]

602-6

S11 (S18')

S3 (S3')
S35, S36
S16

602-7

602-8    A

S15

S11, (S17')

603    A   A11, A13 (A17')   A3 (A3')   A11, (A17')   A16

604

SX5

S35, S36

39

Europäisches
Patentamt

European
Patent Office

Office européen
des brevets

**RAPPORT DE RECHERCHE EUROPEENNE**

Numéro de la demande

EP 20 20 9923

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2005/226420 A1 (MAKELA JAKKE [FI] ET AL) 13 octobre 2005 (2005-10-13)<br>* alinéa [0001] *<br>* alinéa [0037] *<br>* alinéa [0042] *<br>* alinéa [0039] *<br>* alinéa [0041] *<br>* alinéa [0045] *<br>* alinéa [0046] *<br>* alinéa [0048] *<br>* alinéa [0050] *<br>* alinéa [0056] *<br>* alinéa [0062] *<br>* alinéa [0063] *<br>* alinéa [0064] *<br>* alinéa [0066] *<br>* alinéa [0007] *<br><br>-----<br><br>-/-- | 1-15 | INV.<br>H04L9/06<br>H04L9/08<br>H04L9/12<br>H04L9/16<br>H04L9/32 |
| | | | DOMAINES TECHNIQUES RECHERCHES (IPC)<br><br>H04L |

Le présent rapport a été établi pour toutes les revendications

| Lieu de la recherche | Date d'achèvement de la recherche | Examinateur |
|---|---|---|
| Munich | 16 avril 2021 | Yamajako-Anzala, A |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons

............................................................
& : membre de la même famille, document correspondant

EPO FORM 1503 03.82 (P04C02)

Europäisches
Patentamt

European
Patent Office

Office européen
des brevets

# RAPPORT DE RECHERCHE EUROPEENNE

Numéro de la demande

EP 20 20 9923

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | US 2003/026431 A1 (HAMMERSMITH WOLFGANG S [US]) 6 février 2003 (2003-02-06)<br>* alinéa [0007] *<br>* alinéa [0008] *<br>* alinéa [0009] *<br>* alinéa [0010] *<br>* alinéa [0011] *<br>* alinéa [0013] *<br>* alinéa [0045] *<br>* alinéa [0064] *<br>* alinéa [0065] *<br>* alinéa [0066] *<br>* alinéa [0067] *<br>* alinéa [0068] *<br>* alinéa [0069] *<br>* alinéa [0070] *<br>* alinéa [0071] *<br>* alinéa [0078] *<br>* alinéa [0079] *<br>* alinéa [0087] *<br>* alinéa [0099] *<br>* alinéa [0104] *<br>* alinéa [0105] *<br>* alinéa [0107] *<br>* alinéa [0109] *<br>* alinéa [0110] *<br>* alinéa [0117] *<br>* alinéa [0119] *<br>* alinéa [0120] *<br>* alinéa [0131] *<br>----- | 1-15 | |
| A | WO 2018/031750 A1 (QUALCOMM INC [US]) 15 février 2018 (2018-02-15)<br>* le document en entier *<br>-----<br>-/-- | 1-15 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| Munich | 16 avril 2021 | Yamajako-Anzala, A |

CATEGORIE DES DOCUMENTS CITES

X : particulièrement pertinent à lui seul
Y : particulièrement pertinent en combinaison avec un
autre document de la même catégorie
A : arrière-plan technologique
O : divulgation non-écrite
P : document intercalaire

T : théorie ou principe à la base de l'invention
E : document de brevet antérieur, mais publié à la
date de dépôt ou après cette date
D : cité dans la demande
L : cité pour d'autres raisons
.................................................................................
& : membre de la même famille, document correspondant

EPO FORM 1503 03.82 (P04C02)

page 2 de 3

| | Europäisches Patentamt<br>European Patent Office<br>Office européen des brevets | **RAPPORT DE RECHERCHE EUROPEENNE** | Numéro de la demande<br>EP 20 20 9923 |
|---|---|---|---|

## DOCUMENTS CONSIDERES COMME PERTINENTS

| Catégorie | Citation du document avec indication, en cas de besoin,<br>des parties pertinentes | Revendication<br>concernée | CLASSEMENT DE LA<br>DEMANDE (IPC) |
|---|---|---|---|
| A | MENEZES ET AL: "Handbook of Applied Cryptography, PASSAGE",<br>1 janvier 1997 (1997-01-01), HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 546 - 547, 551, XP002301330,<br>ISBN: 978-0-8493-8523-0<br>* le document en entier *<br>----- | 1-15 | |

DOMAINES TECHNIQUES
RECHERCHES (IPC)

Le présent rapport a été établi pour toutes les revendications

| Lieu de la recherche | Date d'achèvement de la recherche | Examinateur |
|---|---|---|
| Munich | 16 avril 2021 | Yamajako-Anzala, A |

CATEGORIE DES DOCUMENTS CITES

X : particulièrement pertinent à lui seul
Y : particulièrement pertinent en combinaison avec un
    autre document de la même catégorie
A : arrière-plan technologique
O : divulgation non-écrite
P : document intercalaire

T : théorie ou principe à la base de l'invention
E : document de brevet antérieur, mais publié à la
    date de dépôt ou après cette date
D : cité dans la demande
L : cité pour d'autres raisons
................................................................
& : membre de la même famille, document correspondant

EPO FORM 1503 03.82 (P04C02)

page 3 de 3

**ANNEXE AU RAPPORT DE RECHERCHE EUROPEENNE
RELATIF A LA DEMANDE DE BREVET EUROPEEN NO.**

EP 20 20 9923

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-04-2021

| Document brevet cité au rapport de recherche | Date de publication | Membre(s) de la famille de brevet(s) | Date de publication |
|---|---|---|---|
| US 2005226420 A1 | 13-10-2005 | AU 2003227785 A1 | 02-12-2003 |
| | | CN 1653743 A | 10-08-2005 |
| | | EP 1506636 A1 | 16-02-2005 |
| | | FI 20025024 A | 18-11-2003 |
| | | KR 20050004154 A | 12-01-2005 |
| | | US 2005226420 A1 | 13-10-2005 |
| | | WO 03098868 A1 | 27-11-2003 |
| US 2003026431 A1 | 06-02-2003 | AT 368981 T | 15-08-2007 |
| | | AU 5303401 A | 08-10-2001 |
| | | DE 60129682 T2 | 30-04-2008 |
| | | EP 1279249 A1 | 29-01-2003 |
| | | JP 2004501532 A | 15-01-2004 |
| | | US 2003016821 A1 | 23-01-2003 |
| | | US 2003026429 A1 | 06-02-2003 |
| | | US 2003026431 A1 | 06-02-2003 |
| | | WO 0174005 A1 | 04-10-2001 |
| WO 2018031750 A1 | 15-02-2018 | US 2018049027 A1 | 15-02-2018 |
| | | WO 2018031750 A1 | 15-02-2018 |

EPO FORM P0460

Pour tout renseignement concernant cette annexe : voir Journal Officiel de l'Office européen des brevets, No.12/82

**EP 3 832 948 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 5907620 A
- US 6072876 A
- US 5675648 A
- US 5124117 A
- US 20050226420 A